# EUROPEAN PATENT APPLICATION

(11) **EP 4 830 968 A1**
(43) Date of publication of application: **28.10.2026**
(21) Application number: 26172991.7
(22) Date of filing: 17.04.2026
(51) Int. Cl.: B60K 35/10, B60K 35/22, B60K 35/81

(54) **VIEW DISPLAY CONTROL METHOD**

(30) Priority: 21.04.2025 CN 202510503426; 21.04.2025 CN 202510503200; 21.04.2025 CN 202510502285; 21.04.2025 CN 202510502267; 21.04.2025 CN 202510503377; 01.12.2025 CN 202511794714; 01.12.2025 CN 202511794612; 01.12.2025 CN 202511794581; 01.12.2025 CN 202511794663; 01.12.2025 CN 202511794642
(71) Applicant: Toyota Jidosha Kabushiki Kaisha, Toyota-shi, Aichi-ken 471-8571 (JP)
(72) Inventor: ZHANG, Yuting, SHANGHAI (CN); KAWANO, Takahiro, SHANGHAI (CN); WANG, Pengfei, SHANGHAI (CN); YU, Lixing, SHANGHAI (CN)
(74) Representative: Cabinet Beau de Loménie

(57) **Abstract**

The present disclosure discloses a view display control method. The view display control method includes: displaying a surround view and a navigation view in a same-screen mode with a display screen of a vehicle in response to receiving a same-screen trigger operation for the navigation view in a case where the display screen displays the surround view of the vehicle in a full-screen mode; or displaying the surround view in the full-screen mode with the display screen in response to receiving a full-screen trigger operation for the surround view in a case where the display screen displays the surround view and the navigation view in the same-screen mode, wherein either or both of the same-screen trigger operation for the navigation view and the full-screen trigger operation for the surround view include a button trigger operation and a scenario trigger operation.

## Description

This application claims priority to Chinese Patent Application No. 202510503377.7, filed on April 21, 2025, and entitled "SCREEN DISPLAY CONTROL METHOD AND APPARATUS", Chinese Patent Application No. 202510503200.7, filed on April 21, 2025, and entitled "SCREEN DISPLAY CONTROL METHOD AND APPARATUS", Chinese Patent Application No. 202510503426.7, filed on April 21, 2025, and entitled "SCREEN DISPLAY METHOD AND APPARATUS", Chinese Patent Application No. 202510502267.9, filed on April 21, 2025, and entitled "SCREEN DISPLAY CONTROL METHOD AND APPARATUS", Chinese Patent Application No. 202510502285.7, filed on April 21, 2025, and entitled "SCREEN DISPLAY METHOD AND APPARATUS", Chinese Patent Application No. 202511794663.X, filed on December 1, 2025, and entitled "VIEW DISPLAY CONTROL METHOD AND APPARATUS", Chinese Patent Application No. 202511794642.8, filed on December 1, 2025, and entitled "VIEW DISPLAY CONTROL METHOD AND APPARATUS", Chinese Patent Application No. 202511794612.7, filed on December 1, 2025, and entitled "VIEW DISPLAY CONTROL METHOD AND APPARATUS", Chinese Patent Application No. 202511794714.9, filed on December 1, 2025, and entitled "VIEW DISPLAY CONTROL METHOD AND APPARATUS", and Chinese Patent Application No. 202511794581.5, filed on December 1, 2025, and entitled "VIEW DISPLAY CONTROL METHOD AND APPARATUS", all of which are incorporated herein by reference in their entireties. Here, the contents of the above Chinese patent application publications are incorporated herein by reference in their entirety as a part or the entirety of the present application.

### BACKGROUND OF THE INVENTION

### Field of the Invention

The present disclosure relates to a technical field of vehicles, particularly to a view display control method.

### Description of Related Art

A method of displaying a surround view on an in-vehicle screen includes, for example, a full-screen display and a non-full-screen display. Here, the full-screen display is a display in which the entire region of the screen is used for displaying the surround view, and the non-full-screen display is a display in which the surround view is displayed in a part of the region of the screen. However, in the related art, the displayed screen is the same regardless of whether the surround view is displayed in the full-screen mode or the non-full-screen mode. As a result, in a case where the surround view is displayed in the non-full-screen mode, an area in which the screen is expanded is relatively small, so that the identifiability of the screen element is relatively low, and the display effect of the screen is significantly reduced. Therefore, the current display of the surround view cannot satisfy the user's needs relatively well, resulting in a poor user experience.

On the other hand, with the improvement of the intelligence level of the vehicle, the smart driving assistance system provides great convenience and assistance to the driver, and in particular, displaying the surround view of the vehicle allows the driver to timely and accurately grasp the distance between the vehicle and the surrounding obstacles or other vehicles so as to input an accurate control operation to the vehicle. However, the display screen of the vehicle needs to display other views that driver needs, for example, a navigation view, in addition to the surround view of the vehicle at the same time. The current user usually manually drags the edge of the surround view of the vehicle to adjust the occupancy of the screen, but such an operation method is likely to distract the user's attention and affect the safety of driving. The user can also minimize the surround view of the vehicle and then open the navigation view, but in this case, the user cannot simultaneously check the two screens, which is inconvenient for the user.

### SUMMARY OF THE INVENTION

In view of this, an embodiment of the present disclosure provides a view display control method that realizes mutual switching between full-screen display of a surround view and same-screen display of the surround view and a navigation view with a single trigger operation, is convenient to operate, reduces the consumption of user's attention, improves the safety of driving, and satisfies user's preference for using the surround view.

In the embodiment of the present disclosure, the number of display elements in the surround view is adjusted depending on different display modes, so that the richness of information and functions of the full-screen surround view is ensured, and at the same time, the identifiability of display elements in the same-screen surround view is improved, thereby improving display effect of the view and improving user experience.

In order to achieve the above object, according to an aspect of the embodiment of the present disclosure, there is provided a view display control method including: displaying a surround view and a navigation view in a same-screen mode with a display screen of a vehicle in response to receiving a same-screen trigger operation for the navigation view in a case where the display screen displays the surround view of the vehicle in a full-screen mode; or displaying the surround view in the full-screen mode with the display screen in response to receiving a full-screen trigger operation for the surround view in a case where the display screen displays the surround view and the navigation view in the same-screen mode. Here, either or both of the same-screen trigger operation for the navigation view and the full-screen trigger operation for the surround view include a button trigger operation and a scenario trigger operation.

Optionally, the receiving of the same-screen trigger operation for the navigation view includes: the same-screen trigger operation for the navigation view including a same-screen scenario trigger operation based on a navigation-applicable scenario; determining that the same-screen scenario trigger operation based on the navigation-applicable scenario is received when a current scenario of the vehicle is detected to be the navigation-applicable scenario. Here, the navigation-applicable scenario includes: a distance between a position of the vehicle and an intersection, a fork in a road, or a ramp entrance of a highway is equal to or less than a predetermined distance.

Optionally, the receiving of the full-screen trigger operation for the surround view includes: the full-screen trigger operation for the surround view including a full-screen scenario trigger operation based on a surround-view-applicable scenario; determining that the full-screen scenario trigger operation based on the surround-view-applicable scenario is received when a current scenario of the vehicle is detected to be the surround-view-applicable scenario. Here, the surround-view-applicable scenario includes: the vehicle preparing to enter a parking space, the vehicle being in a narrow road segment, the vehicle passing another vehicle, or the vehicle changing a lane.

Optionally, the same-screen trigger operation for the navigation view includes a navigation button trigger operation; the surround view displayed in the full-screen mode includes a navigation button; and the displaying of the surround view and the navigation view in the same-screen mode with the display screen in response to receiving the same-screen trigger operation for the navigation view includes: displaying the surround view and the navigation view in the same-screen mode with the display screen in response to receiving a trigger operation for the navigation button.

Optionally, a display state of the navigation button is a schematic diagram of the navigation view, and the schematic diagram of the navigation view is used to dynamically and in real time display a navigation route.

Optionally, the navigation button displays a traffic congestion status of the navigation route in real time.

Optionally, the displaying of the surround view and the navigation view in the same-screen mode with the display screen includes displaying the navigation view in the full-screen mode with the display screen and displaying the surround view on an upper layer over a portion of the navigation view.

Optionally, the displaying of the surround view and the navigation view in the same-screen mode with the display screen includes displaying the surround view in a first part of the display screen and displaying the navigation view in a second part of the display screen. Here there is no overlapping region between the second part and the first part.

Optionally, the surround view displayed in the full-screen mode includes a first-kind display element, a second-kind display element, and a third-kind display element; and the surround view displayed in the same-screen mode does not include at least one display element of either or both of the first-kind display element and the second-kind display element.

Optionally, the first-kind display element includes at least any one or any combination of an information presentation card of a navigation route, an indicator bar for autonomous-driving-supported road segments along the navigation route, and a schematic diagram of the navigation view; and the second-kind display element includes at least either or both of a setting bar for customizing a driving assistance function and a state identifier of a driving assistance system.

Optionally, the setting bar for customizing the driving assistance function includes a button for setting a driving assistance mode.

Optionally, the surround view displayed in the full-screen mode includes at least any one or any combination of the information presentation card of the navigation route, the indicator bar for the autonomous-driving-supported road segments along the navigation route, and the schematic diagram of the navigation view; and in a case where the surround view and the navigation view are displayed in the same-screen mode, the surround view does not include at least any one or any combination of the information presentation card of the navigation route, the indicator bar for the autonomous-driving-supported road segments along the navigation route, and the schematic diagram of the navigation view.

Optionally, the surround view displayed in the full-screen mode includes at least either or both of the setting bar for customizing the driving assistance function and the state identifier of the driving assistance system; and in a case where the surround view and the navigation view are displayed in the same-screen mode, the surround view does not include at least either or both of the setting bar for customizing the driving assistance function and the state identifier of the driving assistance system.

One embodiment of the above disclosure has the following advantages or beneficial effects: mutual switching between the full-screen display of the surround view and the same-screen display of the surround view and the navigation view is realized by a single trigger operation, the operation is convenient, the consumption of the user's attention is reduced, the driving safety is improved, and the user's preference for using the surround view is satisfied. The number of display elements in the surround view is adjusted according to different display modes, so that the richness of information and functions of the full-screen surround view is ensured, and at the same time, the identifiability of the display elements of the same-screen surround view is improved, thereby improving the display effect of the view and improving the user experience.

Further effects of the above non-conventional optional embodiment will be described below in conjunction with specific embodiments.

### BRIEF DESCRIPTION OF THE DRAWINGS

Features, advantages, and technical and industrial significance of exemplary embodiments of the disclosure will be described below with reference to the accompanying drawings, in which like signs denote like elements, and wherein:
FIG. 1 is a schematic diagram of main modules included in the driving assistance system of the vehicle according to an example of the present disclosure;
FIG. 2 is a schematic diagram of the operation principle of the driving assistance system of the vehicle according to an example of the present disclosure;
FIG. 3 is a schematic diagram of the surround view generated by the driving assistance system according to an example of the present disclosure and the surround view displayed on an in-vehicle display screen;
FIG. 4A is a schematic diagram of a system home screen of the in-vehicle display screen according to an example of the present disclosure;
FIG. 4B is a schematic diagram of the in-vehicle display screen displaying the surround view in a full-screen mode according to another example of the present disclosure;
FIG. 4C is a schematic diagram of the in-vehicle display screen displaying the navigation view and the surround view in a second display mode in a same-screen mode according to an example of the present disclosure;
FIG. 4D is a schematic diagram of the in-vehicle display screen displaying the navigation view in a full-screen mode in the second display mode according to an example of the present disclosure;
FIG. 4E is a schematic diagram of the in-vehicle display screen displaying the navigation view in a full-screen mode in a first display mode according to an example of the present disclosure;
FIG. 5 is a schematic diagram of the surround view generated in a scenario where there are many surrounding vehicles according to an example of the present disclosure;
FIG. 6 is a schematic diagram of the surround view generated in a scenario where the vehicle is at an intersection according to an example of the present disclosure;
FIG. 7 is a schematic diagram of the view switching logic on the in-vehicle display screen in the first display mode according to an example of the present disclosure;
FIG. 8 is a schematic diagram of the view switching logic on the in-vehicle display screen in the second display mode according to an example of the present disclosure;
FIG. 9 is a schematic diagram of the surround view displayed in a full-screen mode including a setting button for setting the first display mode and the second display mode according to an example of the present disclosure;
FIG. 10 is a schematic diagram of main steps of a view display control method according to an example of the present disclosure;
FIG. 11 is a schematic diagram of main steps of a view display control method according to another example of the present disclosure;
FIG. 12 is a schematic diagram of main steps of a view display control method according to still another example of the present disclosure;
FIG. 13 is a schematic diagram of switching the view on the in-vehicle display screen by a button in the first display mode according to an example of the present disclosure;
FIG. 14 is a schematic diagram of switching the view on the in-vehicle display screen by a button in the second display mode according to an example of the present disclosure;
FIG. 15 is a schematic diagram of displaying the navigation view in a full-screen mode in a case where a toolbar is not displayed and in the second display mode according to an example of the present disclosure;
FIG. 16 is a schematic diagram of displaying the navigation view in a full-screen mode in a case where the toolbar is not displayed and in the first display mode according to an example of the present disclosure;
FIG. 17 is a schematic diagram of displaying the surround view in a full-screen mode in a case where the toolbar is not displayed according to an example of the present disclosure;
FIG. 18 is a schematic diagram of a surround view button positioning in a lower toolbar according to an example of the present disclosure;
FIG. 19 is a schematic diagram of main steps of a view display control method according to still another example of the present disclosure;
FIG. 20 is a schematic diagram of main steps of a view display control method according to still another example of the present disclosure;
FIG. 21 is a schematic diagram of displaying a surround view button in a case where the toolbar is not displayed and the navigation view and the surround view are displayed in a same-screen mode according to an example of the present disclosure;
FIG. 22 is a schematic diagram of displaying a surround view button in a case where a system home screen (navigation preparation view) is displayed according to the example of the present disclosure;
FIG. 23 is a schematic diagram of displaying the navigation view and the surround view in a vertically arranged manner in a same-screen mode according to another example of the present disclosure;
FIG. 24 is a schematic diagram of displaying the navigation view and the surround view in a same-screen mode according to another example of the present disclosure;
FIG. 25 is a schematic diagram of main steps of a view display control method according to still another example of the present disclosure;
FIG. 26 is a schematic diagram of main steps of a view display control method according to still another example of the present disclosure;
FIG. 27 is a schematic diagram of main steps of a view display control method according to still another example of the present disclosure;
FIG. 28 is a schematic diagram of a surround view including a close button in a case where the navigation view and the surround view are displayed in a same-screen mode according to still another example of the present disclosure;
FIG. 29 is a schematic diagram of main steps of a view display control method according to still another example of the present disclosure;
FIG. 30 is a schematic diagram of main steps of a view display control method according to still another example of the present disclosure;
FIG. 31 is a schematic diagram of main steps of a view display control method according to still another example of the present disclosure;
FIG. 32 is a schematic diagram of a comparison between the surround view displayed in a full-screen mode and the surround view displayed in a same-screen mode according to an example of the present disclosure;
FIG. 33 is a schematic diagram of main modules of a view display control device according to an example of the present disclosure;
FIG. 34 is an exemplary system architecture diagram to which the example of the present disclosure can be applied; and
FIG. 35 is a schematic diagram of a structure of a computer system of a terminal device or a server suitable for use in realizing the example of the present disclosure.

### DETAILED DESCRIPTION OF EMBODIMENTS

Hereinafter, an exemplary example of the present disclosure will be described with reference to the drawings, but the description is intended to facilitate understanding by including various details of the example of the present disclosure, and these are merely considered to be exemplary. Therefore, those skilled in the art should recognize that various changes and modifications can be made to the examples described herein without departing from the scope and spirit of the present disclosure. Similarly, in the following description, the description of known functions and structures will be omitted for the sake of clarity and conciseness.

In a case where there is no conflict, the examples of the present disclosure and the technical features in the examples can be combined with each other.

The view display control method provided by the present disclosure can be applied to a vehicle. The view display control method provided by the present disclosure may be deployed in a vehicle or may be deployed in a terminal that is communicatively connected to the vehicle.

The vehicle in the example of the present disclosure may be in a fully or partially autonomous driving mode. For example, the vehicle acquires the surrounding environment information by an information acquisition system, obtains an analysis result by analyzing the surrounding environment information, and inputs execution parameters such as wheel speed, steering angle, and acceleration to each controller of the vehicle based on the analysis result. The vehicle realizes the fully autonomous driving by controlling the traveling of the vehicle based on the execution parameters, or realizes the partially autonomous driving by performing partial intervention such as lane keeping and constant speed cruise on the vehicle based on the analysis result, or generates and displays the surround view based on the analysis result and provides the user with the driving assistance, thereby enabling the user to make a correct driving decision based on the surround view and/or the navigation view.

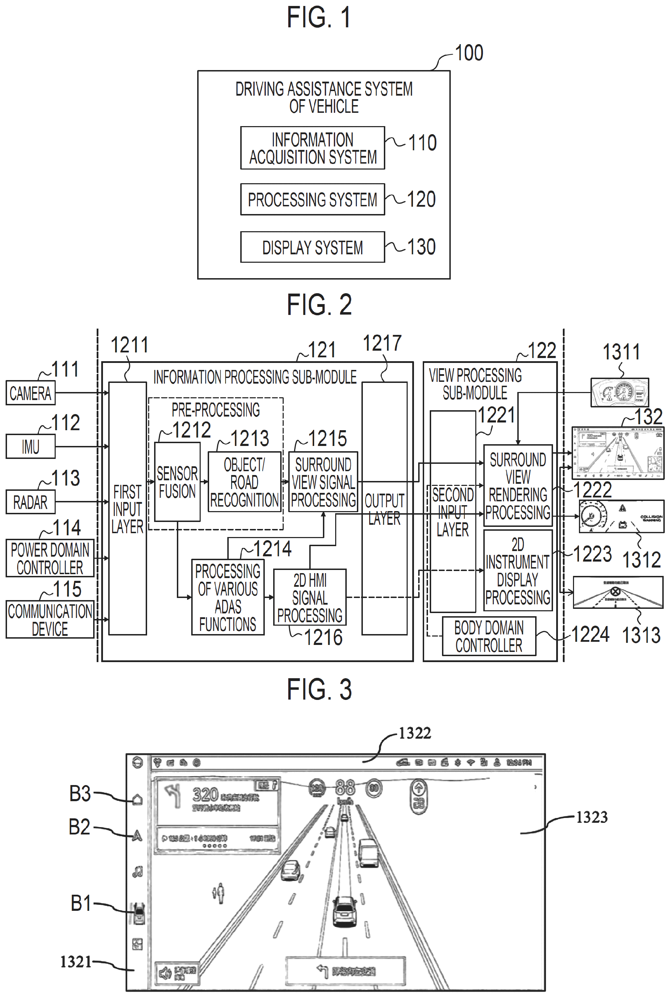

As shown in FIG. 1, a driving assistance system 100 of the vehicle in the present example can include, for example, a plurality of modules such as an information acquisition system 110, a processing system 120, and a display system 130. Here, the information acquisition system 110 is configured by a plurality of types of sensors, and a main function thereof is to collect relevant information on the surrounding environment of the vehicle. Specifically, the information acquisition system 110 can include, for example, a global positioning system (this system may be a GPS system, the Chinese BeiDou Satellite Navigation System, or another type of positioning system), an inertial measurement unit (IMU), a radar (for example, a LiDAR, a millimeter wave radar, or an ultrasonic radar), and an imaging device. The one type or the plurality of types of sensors can be used to detect a surrounding target object (for example, a pedestrian, a vehicle, a road boundary, a traffic sign, and the like) and a corresponding attribute (for example, a position, a form, an orientation, a movement speed, and the like). The detection and recognition functions of the information acquisition system 110 are key for the vehicle to provide the driving assistance to the user.

Here, a core role of the global positioning system is to specify a current geographical coordinate position of the vehicle.

The IMU realizes the detection of a position change and an orientation change of the vehicle based on an inertial acceleration principle. In some examples, the IMU may include an accelerometer and a gyroscope.

The LiDAR senses an object in the surrounding environment of the vehicle by using a laser detection technique. In some examples, the LiDAR can integrate one or a plurality of laser emission sources, laser scanning components, one or a plurality of signal detectors, and other complementary system members.

The millimeter wave radar realizes the detection of the object in the surrounding environment of the vehicle by transmitting a radio signal. In some examples, the millimeter wave radar may be used to acquire information such as a movement speed and/or a movement direction of the object, in addition to having a detection function of the object.

The ultrasonic radar detects the object around the vehicle by using an ultrasonic signal and assists the vehicle in sensing the surrounding environment.

The imaging device is used to capture image data of the surrounding environment of the vehicle, and the type thereof may include a monocular camera, a stereo camera, a structured light camera, a panoramic camera, and the like. The image data acquired by the imaging device may be still image information or dynamic video stream information.

The surrounding environment information of the vehicle mentioned in the examples of the present disclosure may specifically include various types of data collected by the respective sensors in the information acquisition system, but is not limited thereto.

The processing system 120 performs processing and analysis based on the surrounding environment information acquired by the information acquisition system, recognizes an object and a feature element thereof in the surrounding environment of the vehicle, and generates a surround view that simulates an actual environment around the vehicle based on the recognized object. Here, the object may include a pedestrian, a vehicle, a still object, an animal, a lane line, a traffic signal, a road boundary line, and the like.

In the information processing process, the processing system 120 can apply an image recognition algorithm, a video-tracking technique, environment map construction, view rendering, and the like.

The process of generating the surround view by the processing system 120 may include recognition of environment information, generation of the surround view, and scenario presentation of the surround view.

### 1. Recognition of environment information

Data preprocessing: Calibrate and synchronize multi-source sensing data such as a vehicle, a pedestrian, a still object, an animal, and a traffic sign acquired by the information acquisition system, for example, perform alignment of time stamps and spatial calibration on data collected by a camera, a radar, and an IMU, to obtain sensor data in which time series and coordinate systems match.

Feature extraction: The feature extraction is performed on the data after the preprocessing, for example, a three-dimensional contour (for example, a length, a width, and a height of a vehicle, a form of a limb of a pedestrian, and the like) and distance information of a vehicle or a pedestrian are extracted, a moving speed and a moving direction of the vehicle or the pedestrian are captured, and a texture feature (for example, a color of a vehicle, a feature of clothing of a pedestrian, and the like) of the vehicle or the pedestrian is extracted. A sign region (for example, a circular parking sign, an arrow-shaped direction sign) is separated from a traffic sign by an image segmentation technique, a shape, a color, a character feature, and the like of the sign are extracted, and a spatial position of the traffic sign is acquired, thereby forming a sign information package of "feature + coordinate". As for road boundaries and obstacles, point cloud data collected by a LiDAR is fitted to a road edge curve, and distance information of a short-range obstacle (for example, a curb, a low object) collected by an ultrasonic radar is combined to form a complete road environment feature set.

Object recognition: The processing system 120 may invoke an object recognition algorithm (for example, a YOLO model based on deep learning, a SIFT feature matching algorithm based on machine vision in the related art) to classify and recognize the extracted features, and may verify the recognition result by adopting a sensor fusion strategy. For example, after recognizing a pedestrian by the recognition algorithm, it is necessary to obtain an accurate object recognition result, that is, a pedestrian having a moving speed of X meters per second is present at a position of less than 50 meters from the vehicle in front of the vehicle, by combining speed data (confirming that the moving speed of the object is X meters per second) and distance data (confirming that the object is within a range of 50 meters in front of the vehicle) obtained by the feature extraction.

The recognition of the traffic sign may be matched with map data. The vehicle further includes a navigation module, and the processing system 120 compares the sign information collected by the imaging device with the map data based on a position and a type of a predetermined traffic sign stored in a high-precision map provided by the navigation module, to correct recognition variations caused by temporary occlusion or bad weather (for example, heavy rain, dense fog), and to improve the accuracy of traffic sign recognition.

### 2. Generation of surround view: joining of data, coordinate transformation, and rendering of view.

A surround view of the vehicle is generated by three steps of "joining of multi-view image -spatial coordinate transformation -optimal rendering of view" based on the recognized environment information, and a specific flow is as follows.

Joining of multi-view image: by deploying fisheye cameras in four directions of front, rear, left, and right of the vehicle (in some scenarios, side-mirror cameras are added), wide-angle images of the periphery of the vehicle (an angle range of the wide-angle image may be 180° to 220°) are acquired, a transformation matrix between images is calculated for the images captured by adjacent cameras, images of different viewpoints are unified in the same plane coordinate system, a fusion algorithm (for example, a weighted average method) is adopted for overlapping regions included in different images to remove seams (to avoid appearance of "double objects" or "image discontinuities"), a basic surround view covering a predetermined range of the periphery of the vehicle is formed, and the basic surround view is optimally rendered according to display requirements and characteristics of the scenario to finally obtain a surround view that can be displayed on an in-vehicle display screen and is used for driving assistance.

The surround view is updated in real time, and specifically, the surround view is updated once for each predetermined time (for example, 100 to 200 ms) based on data collected in real time (for example, 10 to 20 frames per second) by the information acquisition system 110, so that the synchronization between the surround view and the actual environment is ensured, and erroneous driving decision caused by data delay is avoided.

### 3. Scenario presentation of surround view

The surround view may be displayed with an in-vehicle display screen such as a center display or an instrument display.

The center display may be used for displaying the surround view as a core display terminal of the surround view. The user can switch a display mode of the surround view by touching the in-vehicle display screen, and the display mode of the surround view includes full-screen display and same-screen display (the display screen displays the surround view and a navigation view simultaneously), and the user can also switch between the surround view and other views by touching the in-vehicle display screen.

The in-vehicle display screen for displaying the surround view is usually attached to the vicinity of a steering wheel of the vehicle or to a position where the user can easily observe the display.

In some possible examples, the in-vehicle display screen (or vehicle display screen or display screen of the vehicle) may be a center display, or may be a display screen in which the center display and a display screen in a passenger area are integrated. The in-vehicle display screen is a touch panel, and the user can operate the in-vehicle display screen by touching a screen. In all examples of the present disclosure, the vehicle display screen and the in-vehicle display screen have the same meaning.

Further, in some driving scenarios, the in-vehicle display screen can also display a navigation view or the like in addition to the surround view.

The navigation module can include a map service provided by a map provider, and thus can plan a traveling route of the vehicle based on a destination input by the user, and provide a real-time navigation service, and the navigation module can be used in combination with a global positioning system and an IMU of the vehicle. The map service provided by the map provider may be a two-dimensional map or a three-dimensional high-precision map. The environmental information around the vehicle mentioned below in the present disclosure may include information read from a map (for example, a two-dimensional map or a three-dimensional high-precision map).

Hereinafter, a process of generating the surround view and other warning presentations by the sub-modules included in each module of the information acquisition system 110, the processing system 120, and the display system 130 and the cooperation between the sub-modules, and displaying the surround view and the warning presentation by a display device (for example, a center display, an instrument display, or the like) to perform driving assistance for the user of the vehicle will be described in detail.

In some examples of the present disclosure, a process of the vehicle providing the surround view to assist the driving is as shown in FIG. 2, and the information acquisition system 110 includes vehicle sensors such as a camera 111, an IMU 112, and a radar 113, which are used to acquire the environmental information, and further includes a power domain controller 114, a communication device 115, and the like, which are used to acquire vehicle state information and other driving assistance information.

The IMU 112 is used to measure an acceleration of an object,
The power domain controller 114 is a module for controlling traveling, turning, parking, and the like of the vehicle,
The communication device 115 is used to acquire data on a cloud such as a navigation map.

Additionally, the processing system 120 includes an information processing sub-module 121 and a view processing sub-module 122, and the information processing sub-module 121 includes a first input layer 1211 for converting the information acquired by the information acquisition system 110 into a format readable by the information processing sub-module 121, a sensor fusion (unit) 1212 for fusing and comprehensively analyzing the environmental information perceived by different sensors, a target/road recognition (unit) 1213 for determining a target result and a road information result recognized from the environmental fusion data, each ADAS function processing (unit) 1214 for processing the environmental fusion data to obtain the driving assistance information or the driving warning information, that is, a processing unit of each driving assistance function (for example, adaptive cruise control) of the vehicle, a surround view signal processing (unit) 1215 for processing the target/road recognition result, and the driving assistance information or the driving warning information to be suitable for a matrix signal for generating the surround view, a 2D HDMI signal processing (unit) 1216 for processing the driving assistance information or the driving warning information to be suitable for a 2D (plane) matrix signal, and an output layer 1217 for converting the surround view signal and the 2D matrix signal obtained by the information processing sub-module 121 by processing the environmental information into a CAN/ Ethernet (communication protocol often used inside the vehicle) signal.

Further, the view processing sub-module 122 includes a second input layer 1221 for converting the surround view signal and the 2D matrix signal in the CAN/ Ethernet signal format into a format readable by the view processing sub-module 122, a surround view rendering processing (unit) 1222 for obtaining the surround view by rendering based on the matrix signal for generating the surround view, the 2D matrix signal, and the vehicle body state information, a 2D instrument display processing (unit) 1223 for generating 2D display information based on the 2D matrix signal transmitted by the information processing sub-module 121, and a vehicle body domain controller 1224 for providing the vehicle body state information such as a headlight and a door.

Finally, the display system 130 includes a vehicle display screen such as an instrument display 131 and a center display 132, and is used to display the surround view, the navigation view, and the 2D display information in a fused manner. In the present example, the center display provided at the center of the dashboard of the normal vehicle will be described as an example, but it can be understood that the display screen may include a display region for displaying a traveling screen of the vehicle in a display capable of divided screen display provided on the dashboard, and may not include a display region for displaying entertainment information or the like. Here, the instrument display includes different types, for example, an instrument display 1311, an instrument display 1312, an instrument display 1313, and the like, and the content that can be displayed by the different types of instrument displays is different.

The power domain controller 114 controls the traveling, turning, parking, and the like of the vehicle based on the environmental information perceived by each sensor, the driving assistance information provided by the vehicle, for example, the surround view, the warning of the driving assistance function, and the like, and causes the vehicle to travel safely and smartly based on the perceived environment and the driving assistance function.

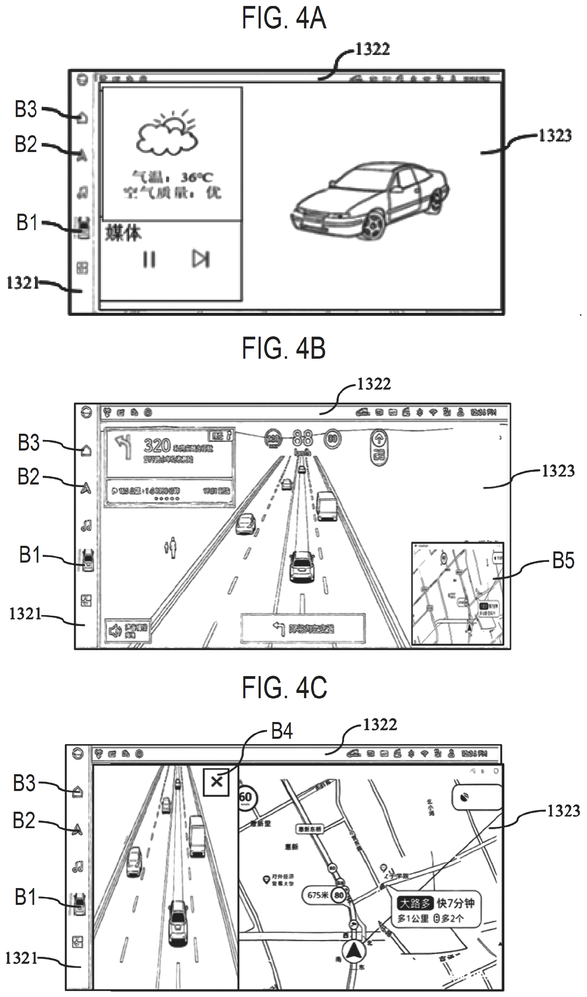

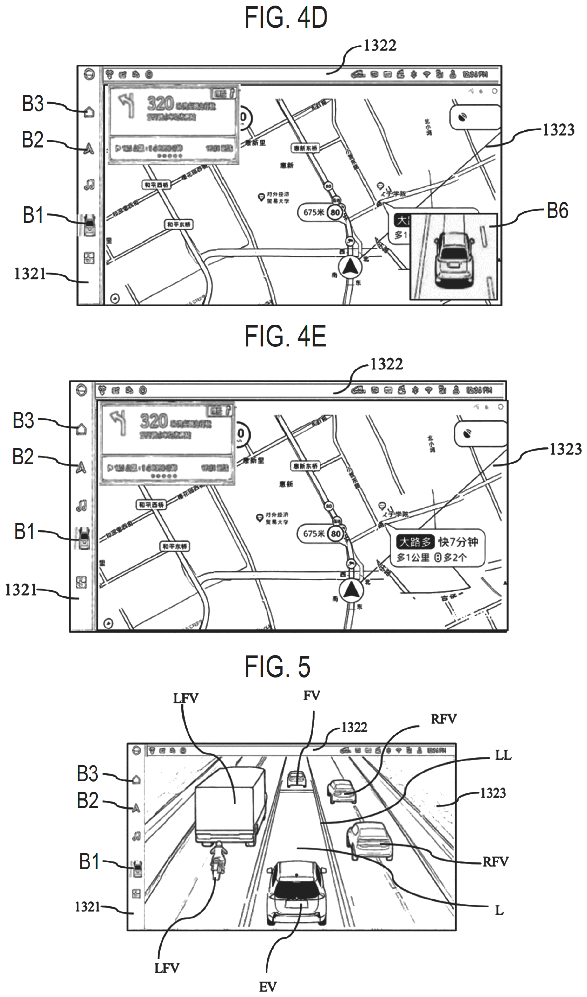

In short, the vehicle collects the environmental information by the information acquisition system 110, processes the environmental information by the information processing sub-module 121, generates the surround view and the warning information of the driving assistance function based on the processing result by the view processing sub-module 122, and finally displays the surround view and the warning information by the display system 130, while controlling the traveling of the vehicle to realize the smart driving assistance. As shown in FIG. 3, the display screen of the center display 132 is an example. Here, the screen displayed by the center display 132 includes at least a left toolbar 1321, a top toolbar 1322, and a view display unit 1323 for displaying a navigation view, a surround view, a system home screen, and the like, and the left toolbar 1321 includes a system home screen (HOME) button B3 for switching the view, a navigation button B2 in the toolbar, and a surround view button B1 in the toolbar. The left toolbar 1321 further includes, for example, other buttons such as a music playback button. The screen displayed by the view display unit 1323 in FIG. 3 is an example of the surround view. The view display unit 1323 can display different views, and as shown in FIGS. 4A, 4B, 4C, 4D, and 4E, FIG. 4A is a schematic diagram in which the view display unit 1323 displays the system home screen (including weather and media application cards), FIG. 4B is a schematic diagram in which the surround view is displayed in full screen (in a full-screen mode), and the surround view displayed in full screen includes a navigation button B5 in the view, FIG. 4C is a schematic diagram in which the view display unit 1323 displays the surround view and the navigation view on the same screen (in a same-screen mode) in the second display mode, and the surround view displayed on the same screen includes a close button B4, FIG. 4D is a schematic diagram in which the view display unit 1323 displays the navigation view in full screen in the second display mode, and the navigation view displayed in full screen includes a surround view button B6 in the view, and FIG. 4E is a schematic diagram in which the view display unit 1323 displays the navigation view in full screen in the first display mode. As described above, the full-screen display of a certain view (for example, the navigation view) means that the entire view display unit is used for displaying the view (for example, the navigation view). As a modification example, the view display unit 1323 may hide the left toolbar 1321 and/or the top toolbar 1322 in a case of performing the view display, that is, the entire center display 132 may be used for the view display.

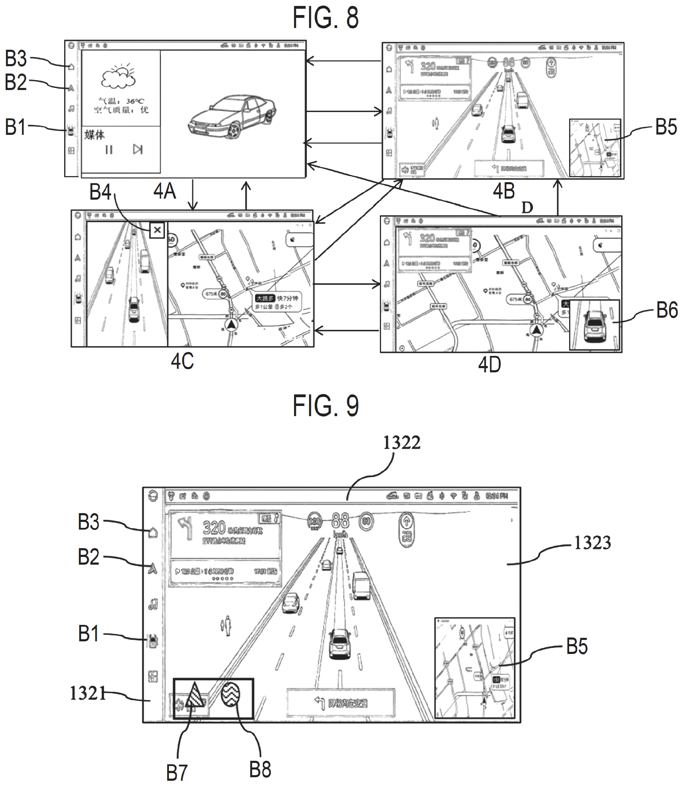

When the user selects the second display mode in advance, in a case where the user triggers a first control (for example, the surround view button B1 in the toolbar), the surround view is displayed in full screen on the display screen (see FIG. 4B), and the surround view displayed in full screen includes the navigation button B5 in the view. In a case where the user triggers a second control (for example, the navigation button B2 in the toolbar or the navigation button B5 in the view), the navigation view and the surround view are displayed in the same-screen mode (same-screen displayed) on the display screen (see FIG. 4C), and in a case where the user triggers a close button (see the close button B4 in FIG. 4C) on the surround view displayed on the same screen, the display screen displays the navigation view in full screen (see FIG. 4D in FIG. 8), and the navigation view includes a surround view button (see the surround view button B6 in the view in FIG. 4D).

In a case where the user selects the first display mode, the surround view displayed in full screen and the navigation view displayed in full screen may be alternately displayed on the display screen. For example, in a case where the user triggers the first control (for example, the surround view button B1 in the toolbar), the surround view is displayed on the display screen (see FIG. 4B), and in a case where the user further triggers the second control (for example, the navigation button B2 in the toolbar), the navigation view is displayed on the display screen instead of the surround view (see FIG. 4E), and then in a case where the user triggers the first control (for example, the surround view button B1 in the toolbar) again, the surround view is displayed on the display screen instead of the navigation view (see FIG. 4B). Of course, the user may not trigger the second control after triggering the first control, and in this case, the surround view may remain continuously displayed on the display screen (see FIG. 4B). The navigation view may remain continuously displayed on the display screen in a case where the user does not trigger the first control after triggering the second control (see FIG. 4E).

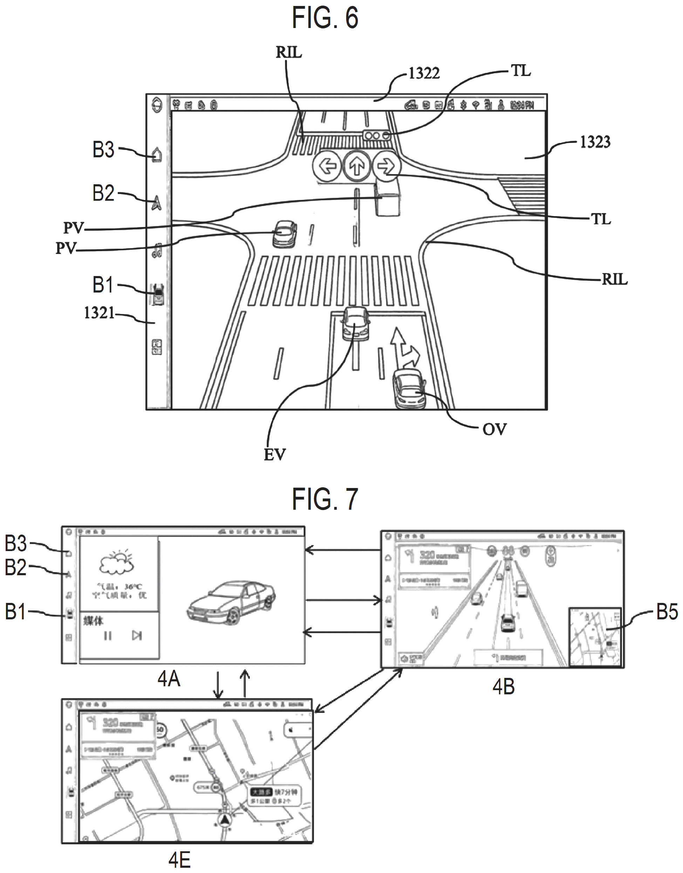

Further, in some examples of the present disclosure, the surround view with a different visual field range and/or a different viewpoint may be generated for different scenarios. For example, in a case where the road condition is good and the inter-vehicle distance in front and rear is large, the visual field range of the generated surround view is increased, and the surround view shown in FIG. 3 is referred to. In a section where the flow of the vehicle is relatively large and the vehicles are relatively dense, it is necessary to display the mutual relationship between the host vehicle and the object in the surrounding environment in an emphasized manner. Therefore, the visual field range of the generated surround view is set to be relatively small to emphasize the positional relationship and the distance between the vehicle and the surrounding object. Referring to the surround view shown in FIG. 5, the surround view includes the following elements: a host vehicle EV, a lane L on which the host vehicle EV travels and a lane line LL, a vehicle FV in front of the host vehicle, a vehicle RFV that travels on the right lane of the host vehicle and is located in front of the right side of the host vehicle, and a vehicle LFV that travels on the left lane of the host vehicle and is located in front of the left side of the host vehicle. The type of the vehicle displayed in the surround view may include a truck, a small vehicle, an SUV, a motorcycle, a bicycle, and the like, and the surround view may further include a pedestrian and other obstacles. The colors of the lane and the lane line displayed in the surround view match the colors of the lane and the lane line in the actual environment. In a case where the background of the surround view is changed, the colors of the lane and the lane line in the surround view are not changed and still match the colors of the lane and the lane line in the actual environment. In a case where it is necessary to display the road distribution of the intersection and the vehicle situation of the intersection for a relatively complex road environment such as an intersection, the generated surround view is like an aerial view captured from the air, so that the driver can have a clear understanding of the current situation of the intersection. Referring to the screen shown in FIG. 6, the surround view includes a road surface marking line RIL, a traffic signal TL, the host vehicle EV and the other vehicle OV waiting to pass through the intersection, and a vehicle PV passing through the intersection at the intersection. The surround view may include other elements such as a vehicle that has just passed through the intersection. That is, the processing system 120 of the vehicle can generate the surround views with different visual field ranges and different tilt angles according to the scenario in which the vehicle is located, and can better satisfy the needs of the driving assistance. Referring to FIGS. 3, 5, and 6, three surround views generated when the vehicle is in different scenarios are illustrated, the imaging angle and the imaging height corresponding to the surround views generated in the different scenarios are different from each other, and the imaging angle and the imaging height determine the visual field range of the surround view and the distance to the front of the vehicle to be imaged.

The surround view can realistically simulate the scenario around the vehicle, and the elements in the surround view may include the host vehicle and the object around the host vehicle, for example, one or a plurality of vehicles, pedestrians, obstacles, lane lines, road shoulders or curbstones, traffic signs, traffic signals, and the like in the directions of the front, the left front, the right front, the rear, the left rear, the right rear, and the like of the host vehicle. Here, the surround view can indicate one or a plurality of elements such as the shape, the size, the color, the texture, and the relative position of the object around the host vehicle. The vehicle may include one or a plurality of vehicle types such as a van, a truck, a motorcycle, a bicycle, a small vehicle, and a sports utility vehicle (SUV).

In some examples, the surround view can be rendered on a screen having a different skin effect, and the user can select the surround view having a different skin effect or replace the skin effect of the surround view according to the preference. The surround view is set to a different skin effect, and the color of each displayed element is different. For example, in a case where the surround view is set to a skin effect A, the colors of the lane and the lane line are displayed in green, and in a case where the surround view is set to a skin effect B, the colors of the lane and the lane line are displayed in gray. Preferably, the corresponding skin effect can be recommended or set for the user based on the user profile data and/or the user history data, and the corresponding skin effect can also be recommended or set for the user based on different holidays, seasons, scenarios outside the vehicle, departure points, and the like.

In other examples, the surround view can also be rendered on a screen embodying different weather conditions, and the user can select the surround view having a different weather effect based on the weather condition of the day, for example, sunny, cloudy, rainy (heavy rain, light rain, medium rain, thunderstorm, and the like), foggy, snowy, strong wind, typhoon, and the like, or the user can replace the weather effect of the surround view, for example, in the case of rainy weather, the surround view can be rendered in a rainy scenario, and the surround view can display the effect of the vehicle traveling in the rain. Preferably, the weather effect corresponding to the surround view can be matched by default based on the current weather condition.

In other examples, a text prompt can be displayed in the surround view, for example, a left turn at 500 meters ahead, and the text prompt can be voice-guided. Preferably, different voice guidance effects can also be recommended or set based on the user profile data, the user history data, the current emotion of the user, and the like.

In the process of the driver driving the vehicle to travel, the navigation view helps the driver to clarify the travel route, the turning node, the lane information (for example, entering the left turn lane), the distance to the destination, and the like, to avoid confusion and operation errors due to unfamiliarity with the route, which may cause the vehicle to deviate from the correct route. In the process of the vehicle traveling, the surround view can indicate detailed information of the object around the host vehicle (for example, a stone pillar, a curb, a pedestrian, another vehicle, a lane line, a stop line, and the like), and in particular, in a case of passing another vehicle on a narrow road, in a case of passing through a complex intersection (for example, an intersection without a signal), and in a case of passing through an obstacle region at a low speed, the surround view can effectively reduce the visual blind spot and reduce the collision risk.

In the process of the vehicle traveling, there are the following advantages in same-screen displaying the navigation view and the surround view by the in-vehicle display screen. That is, it is possible to achieve both the macro route and the micro environment, to improve the driving safety, to provide efficient coordination support for driving in a complex scenario, to reduce the operation burden on the driver to switch the view, to enhance the sense of security of the driver with less driving experience or the driver unfamiliar with the roadside, to reduce the tension, and to improve the driving efficiency and convenience as a whole.

However, due to the problem of the driver's habit or preference, the difference in the driver's experience and the difference in the familiarity with the roadside, or the difference in the complexity of the current road condition, the driver needs to display the navigation view in the full-screen mode, or needs to display the surround view in the full-screen mode, or needs to display the navigation view and the surround view in the same-screen mode, or needs to not display the navigation view and the surround view, and the like. Therefore, in the process of driving the vehicle, the view switching operation is performed via the in-vehicle display screen.

Here, the view switching includes switching from the system main page to the navigation view displayed in the full-screen mode or the surround view displayed in the full-screen mode, switching from the system main page to the navigation view and the surround view displayed in the same-screen mode, switching from the navigation view displayed in the full-screen mode or the surround view displayed in the full-screen mode to the system main page, switching from the navigation view and the surround view displayed in the same-screen mode to the system main page, switching from the navigation view displayed in the full-screen mode or the surround view displayed in the full-screen mode to the navigation view and the surround view displayed in the same-screen mode, switching from the navigation view and the surround view displayed in the same-screen mode to the navigation view displayed in the full-screen mode or the surround view displayed in the full-screen mode, and the like.

The driving assistance system 100 of the vehicle further includes an interactive operation unit including the system home screen (HOME) button B3, the navigation button B2 in the toolbar, the surround view button B1 in the toolbar, the navigation button B5 in the view included in the surround view displayed in the full-screen mode, the close button B4 included in the surround view displayed in the same-screen mode, the surround view button B6 in the view included in the navigation view displayed in the full-screen mode, and other interactive buttons. The user performs the view switching operation via the interactive operation unit.

Regarding the specific operation of the view switching, the embodiment of the present disclosure provides a view display control method that reduces the operation burden of switching the view in the process of the driver driving the vehicle, and at the same time, satisfies the driver's needs for different view displays.

In order to realize the view switching in the in-vehicle display screen, the embodiment of the present disclosure provides a view display control method including a first display mode and a second display mode, in which the first display mode includes displaying the navigation view in the full-screen mode via the in-vehicle display screen and displaying the surround view in the full-screen mode via the in-vehicle display screen, the second display mode includes displaying the navigation view in the full-screen mode via the display screen and displaying the surround view in the full-screen mode via the display screen, and displaying the navigation view and the surround view in the same-screen mode via the display screen, and displaying the navigation view and the surround view in the same-screen mode includes displaying the navigation view and the surround view at the same time via the in-vehicle display screen, and the user can select the first display mode or the second display mode by manual setting. In the present example, the user is supported in setting the display mode of the navigation view and the surround view by himself/herself, and the navigation view and/or the surround view can be displayed in the display form designated by the user, so that the display form of the view is closer to the user's needs, and the user's experience is improved.

In a case where the user selects the first display mode, the switching logic between the system home screen (navigation preparation view), the surround view, and the navigation view on the in-vehicle display screen is as shown in FIG. 7, in which FIG. 4A is a schematic diagram in which the view display unit 1323 displays the system home screen (including the weather and the media application card), FIG. 4B is a schematic diagram in which the surround view is displayed in the full-screen mode, in which the surround view displayed in the full-screen mode includes the navigation button B5 in the view, and FIG. 4E is a schematic diagram in which the view display unit 1323 displays the navigation view in the full-screen mode in the first display mode, in which B1 in FIG. 4A indicates the surround view button provided in the toolbar, B2 in FIG. 4A indicates the navigation button provided in the toolbar, and B3 in FIG. 4A indicates the system home screen (navigation preparation view) button provided in the toolbar. The arrows between each pair of FIG. 4A, FIG. 4B, and FIG. 4E in FIG. 7 indicate the direction of the view switching. Specifically, the arrow from FIG. 4A to FIG. 4B between FIG. 4A and FIG. 4B describes that the view displayed by the view display unit 1323 in FIG. 4A is switched to the view displayed by the view display unit 1323 in FIG. 4B, the arrow from FIG. 4B to FIG. 4A between FIG. 4A and FIG. 4B describes that the view displayed by the view display unit 1323 in FIG. 4B is switched to the view displayed by the view display unit 1323 in FIG. 4A, the arrow from FIG. 4A to FIG. 4E between FIG. 4A and FIG. 4E describes that the view displayed by the view display unit 1323 in FIG. 4A is switched to the view displayed by the view display unit 1323 in FIG. 4E, the arrow from FIG. 4E to FIG. 4A between FIG. 4A and FIG. 4E describes that the view displayed by the view display unit 1323 in FIG. 4E is switched to the view displayed by the view display unit 1323 in FIG. 4A, the arrow from FIG. 4E to FIG. 4B between FIG. 4E and FIG. 4B describes that the view displayed by the view display unit 1323 in FIG. 4E is switched to the view displayed by the view display unit 1323 in FIG. 4B, and the arrow from FIG. 4B to FIG. 4E between FIG. 4E and FIG. 4B describes that the view displayed by the view display unit 1323 in FIG. 4B is switched to the view displayed by the view display unit 1323 in FIG. 4E.

In a case where the user selects the second display mode, the switching logic between the system home screen (navigation preparation view), the surround view, the navigation view, and the surround view and the navigation view displayed in the same-screen mode on the in-vehicle display screen is as shown in FIG. 8, in which FIG. 4A is a schematic diagram in which the view display unit 1323 displays the system home screen (including the weather and the media application card), FIG. 4B is a schematic diagram in which the surround view is displayed in the full-screen mode, in which the surround view displayed in the full-screen mode includes the navigation button B5 in the view, FIG. 4C is a schematic diagram in which the view display unit 1323 displays the surround view and the navigation view on the same screen in the second display mode, in which the surround view displayed in the same-screen mode includes the close button B4, and FIG. 4D is a schematic diagram in which the view display unit 1323 displays the navigation view in the full screen in the second display mode, in which the navigation view displayed in the full-screen mode includes the surround view button B6 in the view. Here, B2 in FIG. 4A indicates the navigation button provided in the toolbar, B1 indicates the surround view button provided in the toolbar, B5 indicates the navigation button included in the surround view displayed in the full-screen mode, B4 indicates the close button included in the surround view displayed in the same-screen mode, B6 indicates the surround view button included in the navigation view displayed in the full-screen mode, and B3 indicates the system home screen(navigation preparation view) button. The arrows in FIG. 8 indicate the order of the view switching, the arrow from FIG. 4A to FIG. 4B between FIG. 4A and FIG. 4B describes that the view displayed by the view display unit 1323 in FIG. 4A is switched to the view displayed by the view display unit 1323 in FIG. 4B, the arrow from FIG. 4B to FIG. 4A between FIG. 4A and FIG. 4B describes that the view displayed by the view display unit 1323 in FIG. 4B is switched to the view displayed by the view display unit 1323 in FIG. 4A, the arrow from FIG. 4A to FIG. 4C between FIG. 4A and FIG. 4C describes that the view displayed by the view display unit 1323 in FIG. 4A is switched to the view displayed by the view display unit 1323 in FIG. 4C, the arrow from FIG. 4C to FIG. 4A between FIG. 4A and FIG. 4C describes that the view displayed by the view display unit 1323 in FIG. 4C is switched to the view displayed by the view display unit 1323 in FIG. 4A, the arrow from FIG. 4C to FIG. 4B between FIG. 4C and FIG. 4B describes that the view displayed by the view display unit 1323 in FIG. 4C is switched to the view displayed by the view display unit 1323 in FIG. 4B, the arrow from FIG. 4B to FIG. 4C between FIG. 4C and FIG. 4B describes that the view displayed by the view display unit 1323 in FIG. 4B is switched to the view displayed by the view display unit 1323 in FIG. 4C, the arrow from FIG. 4C to FIG. 4D between FIG. 4C and FIG. 4D describes that the view displayed by the view display unit 1323 in FIG. 4C is switched to the view displayed by the view display unit 1323 in FIG. 4D, the arrow from FIG. 4D to FIG. 4C between FIG. 4C and FIG. 4D describes that the view displayed by the view display unit 1323 in FIG. 4D is switched to the view displayed by the view display unit 1323 in FIG. 4C, the arrow from FIG. 4D to FIG. 4A between FIG. 4A and FIG. 4D describes that the view displayed by the view display unit 1323 in FIG. 4D is switched to the view displayed by the view display unit 1323 in FIG. 4A, and the arrow from FIG. 4D to FIG. 4B between FIG. 4B and FIG. 4D describes that the view displayed by the view display unit 1323 in FIG. 4D is switched to the view displayed by the view display unit 1323 in FIG. 4B.

In the optional embodiment of the present disclosure, the user selects in advance to display the navigation view and/or the surround view in the first display mode or the second display mode via the setting of the display mode. By providing a setting item of the display mode, for example, a button, a parameter change item, or the like, and allowing the user to select the first display mode or the second display mode, the user is supported in correcting the display mode of the navigation view and the surround view according to the individual needs, and various needs of the user are satisfied, and the user's experience is improved.

In an actual scenario, in a case where the user does not satisfy the currently selected display mode after selecting the first display mode or the second display mode, the user can manually switch to another display mode. In a case where the user does not manually switch the display mode, the current display mode can also be automatically switched to another display mode based on the view operation behavior of the user while using the currently selected display mode.

Hereinafter, a method of automatically switching the first display mode to the second display mode based on the operation behavior of the user will be described in detail by taking an example in which the user selects the first display mode.

In the optional embodiment of the present disclosure, in a case where the user selects the first display mode via the setting, in a case where the display screen displays a view other than the surround view, the display screen displays the surround view in the full-screen mode in response to receiving a trigger operation for the surround view button, and the other view includes the navigation view, in a case where the display screen displays the surround view in the full-screen mode, the display screen displays the navigation view in the full-screen mode in response to receiving a trigger operation for the navigation button, and the display mode is switched from the first display mode to the second display mode in response to the number of rounds in which the surround view button and the navigation button are alternately triggered within the second predetermined duration reaching the second predetermined threshold value.

Specifically, in a case where the user selects the first display mode in advance, in a case where the user triggers the navigation button (see the navigation button B2 in the toolbar in FIG. 4A), the display screen displays the navigation view in the full-screen mode (see FIG. 4E), and the switching of this view can refer to the switching from FIG. 4A to FIG. 4E in FIG. 7. In a case where the user triggers the surround view button (see the surround view button B1 in the toolbar in FIG. 4A), the display screen displays the surround view in the full-screen mode (see FIG. 4B), and the switching of this view can refer to the switching from FIG. 4A to FIG. 4E in FIG. 7. In a case where the display screen displays the navigation view or the surround view in the full-screen mode or displays the other view, in a case where the user triggers the system home screen icon (see the system home screen button B3 in the toolbar), the display screen displays the system home screen (see FIG. 4A), and the switching of this view can refer to the switching from FIG. 4B to FIG. 4A or the switching from FIG. 4E to FIG. 4A in FIG. 7.

In a case where the user frequently alternately checks the navigation view and the surround view, the user may frequently alternately trigger the navigation button B2 (or the navigation button B5 in the view) in the toolbar and the surround view button B1 in the toolbar in order to alternately switch between the full-screen navigation view and the full-screen surround view. In a case where the user operates in this way, it takes time and effort, and the attention of the driver is scattered, which affects the safety of driving. In order to avoid such a situation, in a case where it is detected that the user alternately triggers the navigation button and the surround view button and reaches the preset number of rounds (for example, three rounds) within the predetermined duration (for example, within 10 minutes), the current first display mode is automatically switched to the second display mode. Here, one round is a case where the navigation button is triggered once and then the surround view button is triggered once, or a case where the surround view button is triggered once and then the navigation button is triggered once.

In the present example, the switching operation of the view by the user is detected, the actual needs of the view display by the user are determined, and the display mode is automatically switched such that the actual needs of the current view display by the user are satisfied. It can be understood that the predetermined duration is set based on the actual experience, and the first predetermined threshold value and the second predetermined threshold value may be set based on the actual experience.

Hereinafter, in a case where the user selects the second display mode, how the view is triggered and switched, and in what cases the first display mode is automatically switched to the second display mode will be described.

In the optional embodiment of the present disclosure, in a case where the user selects the second display mode via the setting, in a case where the display screen displays the navigation view and the surround view on the same screen (see FIG. 4C in FIG. 8), the surround view includes the close button B4, and the display mode is switched from the second display mode to the first display mode in response to the number of times the close button B4 is triggered within the first predetermined duration reaching the first predetermined threshold value.

In a case where the user selects the second display mode, in a case where the user triggers the surround view button (see the surround view button B1 in the toolbar in FIG. 4A), the display screen displays the surround view (see FIG. 4B, including the navigation button B5) in the full-screen mode, and in a case where the user triggers the navigation button (B2 or B5), the display screen displays the navigation view and the surround view on the same screen (see FIG. 4C), and in a case where the navigation view and the surround view are displayed in the same-screen mode, the close button B4 is displayed in the surround view, that is, the user may triggers the close button to close the surround view, and the display screen displays the navigation view in the full-screen mode (see FIG. 4D, here, the navigation view displayed in the full-screen mode includes the surround view button B6 in the view).

In an actual scenario, in a case where the user selects the second display mode in advance and displays the navigation view and the surround view on the same screen (see FIG. 4C in FIG. 8), the user wants to see the full-screen navigation view (see FIG. 4D in FIG. 8), and thus, the surround view is closed by the close button B4 of the surround view. In this case, the display screen may display the navigation view (see FIG. 4D in FIG. 8) in the full-screen mode. Subsequently, the user switches to displaying the surround view in the full-screen mode (see FIG. 4B in FIG. 8), then switches to displaying the navigation view and the surround view on the same screen (see FIG. 4C in FIG. 8), then closes the surround view by the close button (see the close button B4 in FIG. 8), then displays the navigation view in the full-screen mode (see FIG. 4D in FIG. 8), and then displays the surround view in the full-screen mode (see FIG. 4B in FIG. 8), and so on, in a repeated sequence. In a case where it is detected that the user triggers the close button (see the close button B4 in FIG. 8) of the surround view a plurality of times (for example, three or more times) within a short time (for example, within 5 minutes), it can be determined that the user is not satisfied with the state in which the navigation view is displayed in the same-screen mode, and the expectation for displaying the navigation view in the full-screen mode (in full-screen display) is relatively high, and thus, the current second display mode is automatically switched to the first display mode. In the present example, it is automatically determined that the current second display mode does not conform to the needs based on the user's switching behavior between the navigation view and the surround view within a certain period, and the system automatically switches the current second display mode to the first display mode, thereby saving the user the trouble of manually switching the display mode and providing the user with a smart view switching experience.

In the optional embodiment of the present disclosure, before executing the step of switching the display mode from the second display mode to the first display mode, it is inquired of the user whether or not to switch the display mode from the second display mode to the first display mode, and in a case where the user inputs the instruction to switch the display mode to the first display mode, the display mode is switched from the second display mode to the first display mode. In order to avoid that the automatic switching of the display mode does not conform to the true intention of the user, it is inquired of the user in advance whether or not to switch the display mode, and after obtaining the affirmative answer from the user, the display mode is switched to satisfy the true needs of the user for the view display and further improve the user experience.

In the optional embodiment of the present disclosure, before switching the display mode from the first display mode to the second display mode, it may be inquired of the user in advance whether or not to switch the display mode from the first display mode to the second display mode, and in a case where the user inputs the instruction to switch the display mode to the second display mode, the display mode may be switched from the first display mode to the second display mode.

In the optional embodiment of the present disclosure, in a case where the display screen displays the navigation view and the surround view on the same screen, the display screen displays the navigation view in full-screen display in response to the detection that the close button is triggered. In a case where the user selects the second display mode, that is, even in a case where the user selects to display the navigation view and the surround view on the same screen, the user may want to see the navigation view displayed in full-screen display from time to time. In order to satisfy the needs of the user who wants to see the full-screen navigation view from time to time, the close button (see the close button B4 included in FIG. 4C in FIG. 8) is provided in the surround view that is same-screen displayed, and the user triggers the close button to close the surround view and display the navigation view in full-screen display on the display screen (see FIG. 4D in FIG. 8), thereby satisfying the temporary needs for the view display at a special timing of the user.

In the optional embodiment of the present disclosure, the setting button of the display mode may be displayed on the surround view displayed in full-screen display. The setting button of the display mode may include one or a plurality of setting buttons. As shown in FIG. 9, the schematic diagram of the setting button of the display mode includes a first display mode button B7 and a second display mode button B8, and both of the two buttons are provided in the surround view. In an actual scenario, for example, the user may have previously selected the first display mode, but in the actual driving process, the user may find that the full-screen surround view and the full-screen navigation view do not satisfy the needs of the user for the navigation view and the surround view, and specifically, the user may find that the full-screen surround view and the full-screen navigation view do not satisfy the needs of the user to display the navigation view and the surround view on the same screen. In a case where the user is currently displaying the surround view, in order to facilitate the need to change the display mode, the setting button of the display mode, for example, the first display mode button B7 and/or the second display mode button B8 is provided in the surround view, and the user can switch the display mode from the first display mode to the second display mode or switch the display mode from the second display mode to the first display mode by directly triggering the first display mode button B7 and/or the second display mode button B8.

Here, in a case where only one setting button of the display mode is provided in the surround view, in a case where this button is turned on, the current display mode can be set to the first display mode, and in a case where this button is turned off, the current display mode can be set to the second display mode. In a case where only one setting button of the display mode is provided in the surround view, in a case where this button is turned on, the current display mode may be set to the second display mode, and in a case where this button is turned off, the current display mode can be set to the first display mode.

In a case where two buttons are same-screen provided in the surround view, in a case where one display mode button is turned on and the other display mode button is turned off, the current display mode can be set to the first display mode, and in a case where the previous button is turned off and the subsequent button is turned on, the current display mode can be set to the second display mode. In the present example, two display modes can be set by two buttons, respectively, and a situation in which the user confuses and performs an erroneous operation can be avoided. By selectively designing the two buttons to be in different display states (see FIG. 9), the possibility that the user confuses the two buttons can be further prevented, and the possibility that the user performs an erroneous operation can be further reduced.

In the optional embodiment of the present disclosure, the two setting buttons of the display modes cannot be turned on at the same time. That is, the on states of the two setting buttons of the display modes are exclusive. Therefore, by changing the state of one button, the state of the other button can be changed accordingly. For example, in a case where the first display mode button B7 is turned on and the second display mode button B8 is turned off, the user switches only the second display mode button B8 from the off state to the on state, but the first display mode button B7 is automatically switched from the on state to the off state. In the present example, the user can directly turn on the first display mode/second display mode or directly turn off the first display mode/second display mode by triggering the first display mode button B7/second display mode button B8 once, thereby omitting the effort of the user to operate the two buttons, for example, the effort of turning off the first display mode button B7 first and then turning on the second display mode button B8, and reducing the complexity of the user's operation.

In the optional embodiment of the present disclosure, the setting button of the display mode is provided in the toolbar included in the surround view. FIG. 9 is a schematic diagram in which two setting buttons corresponding to two display modes are provided in the toolbar, and a button region and a view region are isolated from each other to reduce the possibility of an erroneous operation.

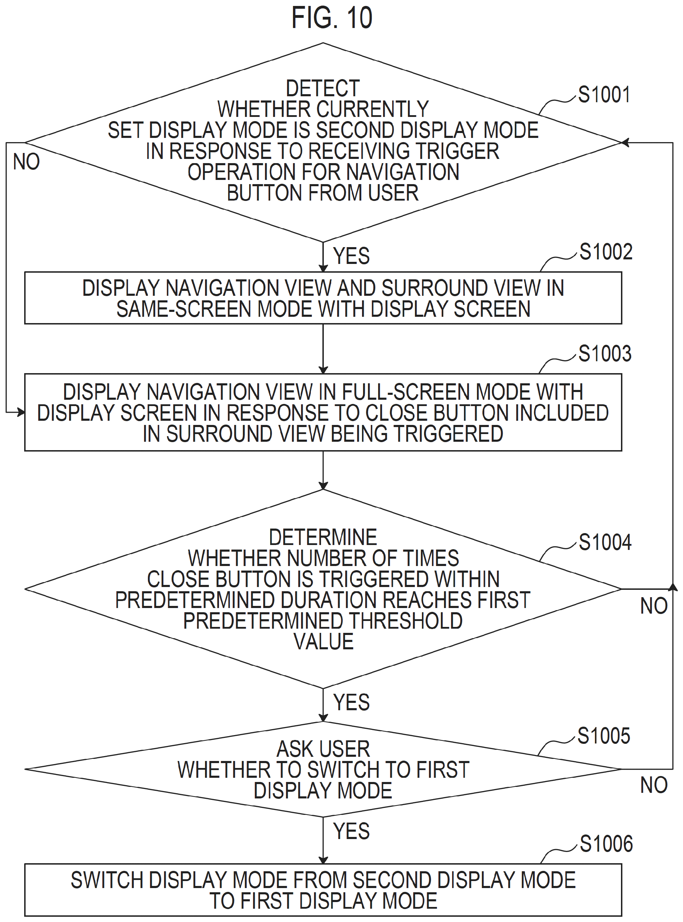

Hereinafter, a view display control method will be described by way of example. As shown in FIG. 10, the view display control method of the present example mainly includes the following main steps S1001 to S1006.

In step S1001, detect whether the currently set display mode is the second display mode in response to receiving the trigger operation for the navigation button from a user, and in a case where the answer is yes, step S1002 is executed, and in a case where the answer is no (first display mode), step S1003 is executed.

In step S 1002, display the navigation view and the surround view in the same-screen mode with the display screen.

Here, in a case where the navigation view and the surround view are displayed in the same screen mode, the surround view includes a close button.

In step S1003, display the navigation view in the full-screen mode with the display screen in response to the close button included in the surround view being triggered.

In step S1004, determine whether the number of times the close button is triggered within a predetermined duration reaches a first predetermined threshold value, and in a case where the determination is yes, step S1005 is executed, and in a case where the determination is no, step S1001 is executed.

In step S1005, ask the user whether to switch to the first display mode, and in a case where the answer is yes (the user returns an affirmative command), step S1006 is executed, and in a case where the answer is no (the user returns a negative command), step S1001 is executed.

In step S1006, switch the display mode from the second display mode to the first display mode.

For the terms in the above example, the description of the terms in the above example can be referred to.

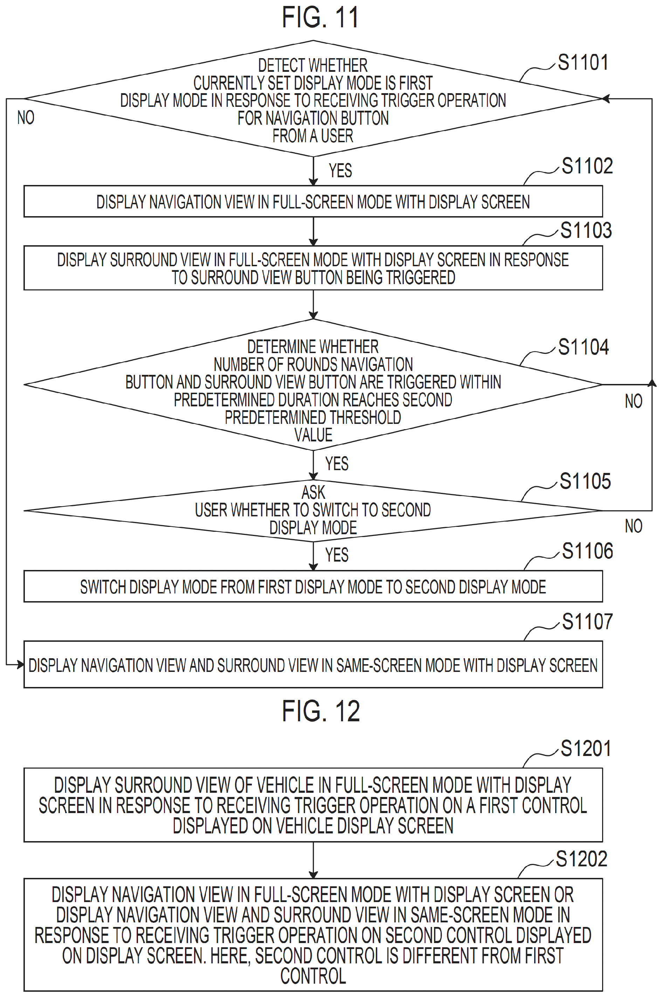

Hereinafter, a view display control method will be described by way of example with reference to another specific example. As shown in FIG. 11, the view display control method of the present example mainly includes the following main steps S1101 to S1107.

In step S1101, detect whether the currently set display mode is the first display mode in response to receiving the trigger operation for the navigation button from a user, and in a case where the determination is yes, step S1102 is executed, and in a case where the determination is no (second display mode), step S1107 is executed.

In step S1102, display the navigation view in the full-screen mode with the display screen.

In step S1103, display the surround view in the full-screen mode with the display screen in response to surround view button being triggered.

In step S1104, determine whether the number of rounds the navigation button and the surround view button are triggered within a predetermined duration reaches a second predetermined threshold value, and in a case where the determination is yes, step S1105 is executed, and in a case where the determination is no, step S1101 is executed.

In step S1105, ask the user whether to switch to the second display mode, and in a case where the answer is yes (the user returns an affirmative command), step S1106 is executed, and in a case where the answer is no (the user returns a negative command), step S1101 is executed.

In step S1106, switch the display mode from the first display mode to the second display mode.

In step S1107, display the navigation view and the surround view in the same-screen mode with the display screen.

For the terms in the above example, the description of the terms in the above example can be referred to.

The view display control method of the example of the present disclosure includes the first display mode and the second display mode, in which the first display mode includes displaying the navigation view in the full-screen mode and displaying the surround view in the full-screen mode with the in-vehicle display screen , the second display mode includes displaying the navigation view in the full-screen mode, displaying the surround view in the full-screen mode, and displaying the navigation view and the surround view in the same-screen mode with the display screen, displaying the navigation view and the surround view in the full-screen mode includes displaying the navigation view and the surround view at the same time by the display screen, and the user selects the first display mode or the second display mode by setting. As a result, by supporting the user to set the view display mode by himself/herself, the navigation view and/or the surround view can be displayed in the display method designated by the user, the view display method is closer to the needs of the user, and the user experience is improved.

Based on the setting of the first display mode and the second display mode, how the user triggers the button to realize the switching of the view during driving will be described below.

FIG. 12 is a schematic diagram of main steps of a view display control method according to the example of the present disclosure.

As shown in FIG. 12, the view display control method of the example of the present disclosure mainly includes steps S1201 to S1202.

Step S1201: display the surround view of the vehicle in the full-screen mode with the display screen in response to receiving a trigger operation on a first control displayed on the vehicle display screen;

Step S1202: display the navigation view in the full-screen mode with the display screen or display the navigation view and the surround view in the same-screen mode in response to receiving a trigger operation on a second control displayed on the display screen, the second control is different from the first control. The view display control method of the present example is mainly applied to a driving scenario of the vehicle.

Specifically, the vehicle display screen may display two controls, namely the first control (for example, a surround view button B1 in a toolbar) and the second control (for example, a navigation button B2 in the toolbar). In a case where the user selects the first display mode in advance, in a case where the user triggers the first control (for example, the surround view button B1 in the toolbar), the surround view is displayed in full screen and displayed on the display screen(see FIG. 4B), and in a case where the user triggers the second control (for example, the navigation button B2 in the toolbar), the navigation view is displayed in full screen and displayed on the display screen (see FIG. 4E).

Here, the first control includes the surround view button B1 in the toolbar and the surround view button B6 in the view included in FIG. 4D, and realizes that the user easily opens the surround view with one trigger during driving, and the second control includes the navigation button B2 in the toolbar and the navigation button B5 in the view included in FIG. 4B, and realizes that the user easily opens the navigation view with one trigger during driving.

Here, the display of the surround view allows the user to easily check the object around the vehicle, for example, a pedestrian, a vehicle, or an obstacle, and to make a more accurate driving decision. The navigation view displays at least a navigation route planned based on a departure point and a destination point input by the user, and provides route guidance to the user.

In a case where the user selects the second display mode, the surround view displayed in full screen and the navigation view and the surround view displayed on the same screen may be alternately displayed on the display screen. For example, in a case where the user triggers the first control (for example, the surround view button B1 in the toolbar), the surround view is displayed in full screen on the display screen (see FIG. 4B), and in a case where the user triggers the second control (for example, the navigation button B2 in the toolbar), the navigation view and the surround view displayed on the same screen are displayed on the display screen (see FIG. 4C). Then, in a case where the user triggers the first control again, the surround view displayed in full screen is displayed on the display screen instead of the navigation view and the surround view displayed on the same screen. After the user triggers the first control, the user may not trigger the second control, and in this case, the surround view displayed in full screen may continue to be displayed on the display screen (see FIG. 4B). In a case where the user does not trigger the first control after the user triggers the second control, the navigation view and the surround view displayed on the same screen may continue to be displayed on the display screen (see FIG. 4C).

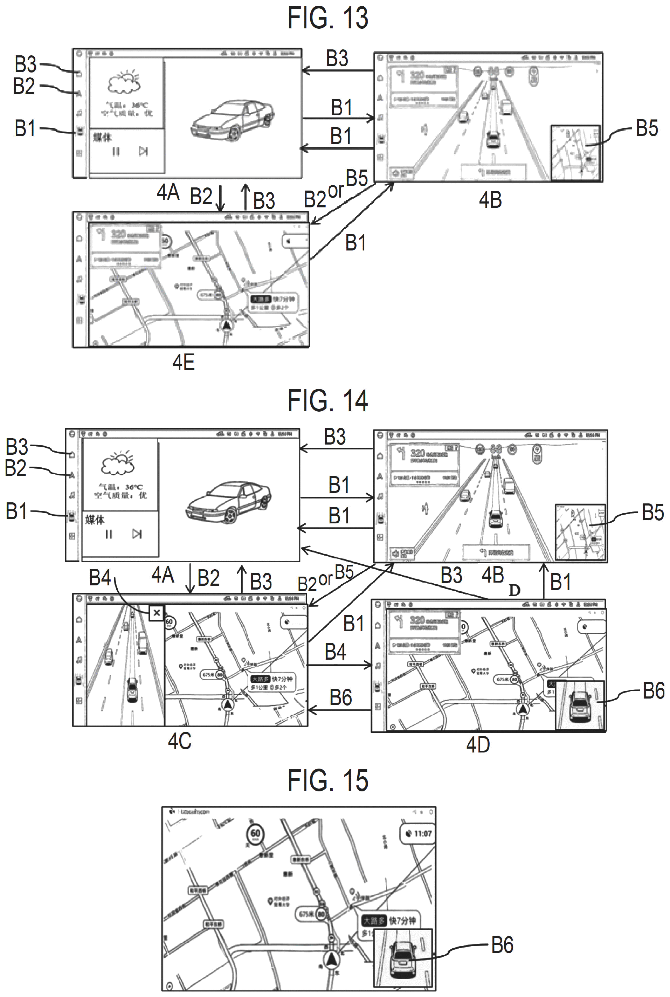

In a specific example, in a case where the display modes of the navigation view and the surround view are the first display mode, the switching logic of the system home screen (navigation preparation view), the navigation view, and the surround view of the in-vehicle display screen when the vehicle navigation function is on is as shown in FIG. 13, and in FIG. 13, each arrow is attached with an alphanumeric symbol, the direction of the arrow indicates the switching direction of the view, and the alphanumeric symbol indicates a button that can trigger the switching of the view. For example, the arrow from FIG. 4A to FIG. 4B in FIG. 13 is attached with an alphanumeric symbol B1, which describes that the surround view button B1 in the toolbar is triggered, and the view displayed on the display screen is switched from FIG. 4A to FIG. 4B. Further, for example, FIG. 13 includes an arrow from FIG. 4B to FIG. 4E, and the attached alphanumeric symbol is B2 or B5, which indicates that the view displayed on the display screen is switched from FIG. 4B to FIG. 4E in a case where the navigation button B2 in the toolbar or the navigation button B5 in the view is triggered. All other arrows and the attached alphanumeric symbols have similar meanings, and the description thereof will be omitted here.

In another specific example, in a case where the display modes of the navigation view and the surround view are the second display mode, the switching logic of the system home screen(navigation preparation view), the navigation view, and the surround view of the in-vehicle display screen when the vehicle navigation function is on is as shown in FIG. 14, and in FIG. 14, each arrow is attached with an alphanumeric symbol, the direction of the arrow indicates the switching direction of the view, and the alphanumeric symbol indicates a button that can trigger the switching of the view. For example, the arrow from FIG. 4A to FIG. 4B in FIG. 14 is attached with an alphanumeric symbol B1, which describes that the surround view button B1 in the toolbar is triggered, and the view displayed on the display screen is switched from FIG. 4A to FIG. 4B. Further, for example, FIG. 14 includes an arrow from FIG. 4B to FIG. 4C, and the attached alphanumeric symbol is B2 or B5, which indicates that the view displayed on the display screen is switched from FIG. 4B to FIG. 4C in a case where the navigation button B2 in the toolbar or the navigation button B5 in the view is triggered. All other arrows and the attached alphanumeric symbols have similar meaning, and the description thereof will be omitted here.

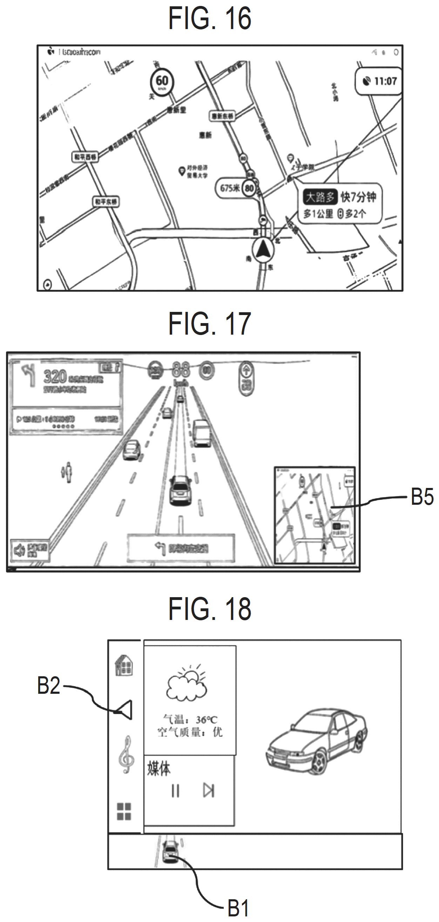

Here, the full-screen display of the navigation view and/or the surround view includes at least two cases. One case is a case where the display screen displays the toolbar and uses all regions of the display screen excluding the toolbar for display of the navigation view and/or the surround view, and the like, and is as shown in FIGS. 4A, 4B, 4C, 4D, and 4E. Here, FIG. 4D is a schematic diagram showing the full-screen display of the navigation view in a case where the toolbar is displayed, and FIG. 4B is a schematic diagram showing the full-screen display of the surround view in a case where the toolbar is displayed. Another case is a case where the display screen does not display the toolbar and all of the display screen is used for display of the navigation view (as shown in FIGS. 15 and 16) or a case where all of the display screen is used for display of the surround view (as shown in FIG. 17).

Here, the same-screen display of the navigation view and the surround view also includes at least two cases. One case is a case where the navigation view and the surround view each occupy a part of the display screen, and another case is a case where the navigation view and the surround view are hierarchically displayed and one view is smaller than the other view. It is preferable that the surround view is located in an upper layer, the navigation view is located in a lower layer, the navigation view is displayed in the full-screen mode, the surround view is smaller than the navigation view. Preferably, the surround view is located in an upper layer of a left side portion of the navigation view.

In the present example, by one trigger operation, the surround view and/or the navigation view are opened, the operation step of opening the surround view and/or the navigation view is simplified, the convenience of the operation is improved, the dispersion of the driver's attention is reduced, the display method of the view is enriched, the user can select the corresponding display method of the view as necessary, and the user experience is improved. In particular, in a case where the display screen displays another interface, the user needs to quickly understand the surrounding road conditions, and for example, in a case of passing through a narrow road segment or in a case of preparing for a lane change, the user can immediately reach the surround view in the full-screen display with one touch by triggering the first control, and the convenience of switching the view is improved. In a case where the user needs to check the navigation view, for example, in a case of approaching a fork in a road or a ramp entrance, the user turns on the navigation view with one touch by triggering the second control, and the convenience of switching the view is improved. In addition, by setting the display mode of the navigation view in advance, it is possible to select whether to display the navigation view in the full-screen mode or to display the navigation view and the surround view on the same screen, thereby satisfying different needs of the user and providing a user experience.

After the second control (the navigation button B2 in the toolbar or the navigation button B5 in the view) is triggered, the user sets whether the display screen displays the navigation view in the full-screen mode or displays the navigation view and the surround view on the same screen, that is, the user sets, and thus, the first display mode or the second display mode can be selected.

In the optional example of the present disclosure, in response to receiving a trigger operation for the second control displayed by the display screen, displaying the navigation view in the full-screen mode or displaying the navigation view and the surround view on the same screen by the display screen includes detecting setting information related to a display mode of the vehicle in response to receiving a trigger operation for the second control, displaying the navigation view and the surround view on the same screen by the display screen in a case where the setting information indicates that the display mode includes the same-screen mode (in a case where the setting information indicates the second display mode) (see FIG. 4C), and displaying the navigation view in the full-screen mode by the display screen in a case where the setting information indicates that the display mode includes only the full-screen mode (in a case where the setting information indicates the first display mode) (see FIG. 4E).

Specifically, the user can preset the display mode of the view, for example, the first display mode or the second display mode in advance, and in a case where the display mode preset by the user is the second display mode, the in-vehicle display screen can display the navigation view in the full-screen mode (see FIG. 4D), display the surround view in the full-screen mode (see FIG. 4B), and display the navigation view and the surround view on the same screen (see FIG. 4C). In a case where the user triggers the second control in the toolbar (the navigation button B2 in the toolbar), the display screen displays the navigation view and the surround view on the same screen (see FIG. 4C). Alternatively, in a case where the user triggers the second control (the navigation button B5 in the view in FIG. 4B) included in the surround view, the display screen displays the navigation view and the surround view on the same screen (see FIG. 4C).

In a case where the display mode preset by the user is the first display mode, the in-vehicle display screen can display the navigation view in the full-screen mode (see FIG. 4E) and display the surround view in the full-screen mode (see FIG. 4B). In a case where the user triggers the second control (the navigation button B2 in the toolbar or the navigation button B5 in the view), display screen displays the navigation view in the full-screen mode (see FIG. 4E). The user can correct the setting information of the display mode in advance according to personal needs or preferences, and in a case where the setting information indicates the first display mode, the display screen displays the navigation view in the full-screen mode in response to triggering the second control (see FIG. 4E). In a case where the setting information indicates the second display mode, the display screen displays the navigation view and the surround view on the same screen in response to triggering the second control (see FIG. 4C). In the present example, the user sets the display mode of the view by himself/herself, so that the display form of the view is flexible, all different needs of the user are satisfied, and the user experience is improved.

In a case of opening the navigation view, in addition to triggering the navigation button, it is also possible to open a page in which the navigation application icon is present one by one via the multi-stage function menu, and in a case where the navigation application icon is clicked, the navigation view is opened.

In a case of opening the surround view, in addition to triggering the surround view button B1 in the toolbar shown in FIGS. 13 and 14 or the surround view button B6 in the view, it is also possible to open a page in which the surround view application icon is present one by one via the multi-stage function menu, and in a case where the surround view application icon is clicked, the surround view is opened.

In comparison with a method of opening the navigation view or the surround view via the multi-stage function menu, the method of triggering the navigation button B2 in the toolbar or the navigation button B5 in the view and the surround view button B1 in the toolbar or the surround view button B6 in the view is more rapid and convenient, and is suitable for a view switching operation in a driving scenario.

In an actual scenario, the user sets the second display mode in advance, but in a mode in which the navigation view and the surround view are displayed on the same screen during driving, the display effect of the navigation view is not so ideal, and there is a case where the user still wants to use the navigation view displayed in the full-screen mode. In this case, the surround view can be closed by the close button B4 of the surround view, and the navigation view can be displayed in the full-screen mode. Therefore, in the optional example of the present disclosure, in a case where the display screen displays the navigation view and the surround view on the same screen, the surround view includes a close button (see the close button B4 in FIG. 4C), and the method further includes displaying the navigation view in the full-screen mode by the display screen in response to receiving a trigger operation for the close button (see FIG. 4D). The present example provides an opportunity for the user to temporarily correct the display mode of the view, makes the display form of the view more flexible, and can respond to a case where the user temporarily changes the needs.

Since the surround view and the navigation view are views that the user often uses, the corresponding first control and second control of both are provided on a user interface that is often used, for example, on a system main page or in a toolbar at an edge portion of the system main page, so that the user can easily trigger the controls, and the convenience of use for the user is improved. FIG. 14 is a schematic diagram in which a first control (surround view button B1 in the toolbar) and a second control (navigation button B2 in the toolbar) are provided in a toolbar at an edge portion of a system screen.

In the optional example of the present disclosure, the first control includes a first fixed button, a first card, or a first floating button, and/or the second control includes a second fixed button, a second card, or a second floating button. Specifically, in a case where the first control is a fixed button, the first fixed button may be provided in the toolbar (surround view button B1 in the toolbar shown in FIG. 14). In a case where the first control is a card or a floating button, the first card or the first floating button may be displayed in the navigation view (for example, the surround view button B6 in the view included in FIG. 4D, which may be a card or a floating button). In a case where the second control is a fixed button, the second fixed button may be provided in the toolbar, such as the navigation button B2 in the toolbar shown in FIG. 14. In a case where the second control is a card or a floating button, the card or the floating button may be displayed in the surround view, and the navigation button B5 in the view included in FIG. 4B is referred to. Alternatively, the first control may be a card or a floating button and may be displayed in any other view, thereby enabling switching to the full-screen surround view at any time.

In the optional example of the present disclosure, the first fixed button (surround view button B1 in the toolbar shown in FIG. 14) and/or the second fixed button (navigation button B2 in the toolbar shown in FIG. 14) is provided in a partial region on a side close to the driver in a horizontal direction in a display region of the display screen. In the present example, the first fixed button and/or the second fixed button is provided at a position close to the driver in the display region, for example, on the left side of the display region, in order to make it easy for the driver to trigger the first fixed button and/or the second fixed button.

In the optional example of the present disclosure, the first fixed button and/or the second fixed button is provided in the toolbar, in a case where the first fixed button and/or the second fixed button is provided in one toolbar, the toolbar is provided on a lower side or a left side of the display region of the display screen, and in a case where the first fixed button and the second fixed button are provided in two toolbars, the two toolbars are provided on the lower side and the left side of the display region of the display screen. One or both of the first fixed button and the second fixed button may be provided in the toolbar. In a case where only one toolbar is included, the toolbar may be located on the left side or the lower side of the display region, and in a case where two toolbars are included, one toolbar may be located on the left side of the display region and the other toolbar may be located on the lower side of the display region. As shown in FIG. 18, the first fixed button (surround view button B1 in the toolbar) is provided in the lower toolbar 1324, and the second fixed button (navigation button B2 in the toolbar) is provided in the left toolbar 1321.

In the optional example of the present disclosure, in a case where the display screen does not display the toolbar and displays only the surround view, the second control is provided in the surround view as shown in FIG. 17. Preferably, the second control is displayed in the surround view in the form of a floating button (navigation button B5 in the view shown in FIG. 17) so that the user can easily change the position of the second control by dragging the second control and satisfy the needs of a different user. In a case where the display screen displays the toolbar and the surround view, the second control is provided in the toolbar and is set as the navigation button B2 in the toolbar shown in FIG. 14.

In the optional example of the present disclosure, in a case where the display screen displays the surround view in full-screen display, in response to receiving a trigger operation for the first control, the display screen displays the system main page or enters the navigation preparation view. With reference to FIG. 13 or FIG. 14, in a case where the surround view (see FIG. 4B) is displayed in full-screen display, the driver triggers the first control in the toolbar, that is, the first fixed button (surround view button B1 in the toolbar), and the display screen returns to display the system main page (see FIG. 4A) from the surround view in full-screen display. In a case where the display screen displays the system main page or any other screen (both of which may be referred to as the navigation preparation view), the first control (surround view button B1 in the toolbar) is triggered, and the display screen switches from the system main page (see FIG. 4A) to the surround view (see FIG. 4B) in full-screen display. In the present example, the technical effect of enabling one-touch entry from the system main page to the full-screen surround view and one-touch return from the full-screen surround view to the system main page is achieved, and in a case where the user needs the surround view, the surround view can be activated by one touch, and then in a case where the user needs the system main page, the user can return from the surround view to the system main page by one touch, the operation is easy and quick, and the user experience is improved. In addition to returning to the system main page by one touch, it is also possible to return to the screen before entering the full-screen surround view, for example, the music playback screen, by one touch, and it is also possible to return to the screen before entering the navigation view and/or the surround view, for example, the radio interface, by one touch. It can be understood that the page to which the first control is returned by one touch from the full-screen surround view may be flexibly set.

In the optional example of the present disclosure, the display state of the first control is a schematic diagram of the surround view (see surround view button B6 in the view included in FIG. 4D), and in a case where the second control is provided in the surround view, the display state of the second control is a schematic diagram of the navigation view (see navigation button B5 in the view included in FIG. 4B). The appearance of the first control (surround view button B6 in the view) is designed in the schematic diagram of the surround view, and the appearance of the second control (navigation button B5 in the view) is designed in a style different from the first control, so that the user is prevented from confusing the two, the possibility of erroneous triggering of the control is reduced, and the efficiency of turning on the screen is improved.

Further, the display state of the first control (surround view button B6 in the view) is in the form of a schematic diagram of the surround view, and the schematic diagram of the surround view may be a still image in a classical style of the vehicle surround view so that the user can more easily understand or know the use of the button. Alternatively, the schematic diagram of the surround view may be a full or partial dynamic image of the surround view generated based on the real-time state of the surroundings of the host vehicle, so that the schematic diagram of the surround view not only serves as the use of the button but also allows the user to timely understand the real-time dynamics of the surroundings of the host vehicle, effectively utilizes the display area, and improves the utilization rate of the display area. Alternatively, the schematic diagram of the surround view may be a playback of the demonstration animation of the vehicle surround view. The display state of the surround view button may be a combination of some of the schematic diagrams of the surround views.

The display state of the second control is in the form of a schematic diagram of the navigation view (see navigation button B5 in the view included in FIG. 4B), and the schematic diagram of the navigation view may be a classical style of the navigation view or a still image so that the user can easily understand the use of the navigation button, or the schematic diagram of the navigation view may be based on the entire or partial real-time navigation view in the traveling process of the host vehicle, so that the schematic diagram of the navigation view not only serves as the use of the button but also allows the user to understand the current navigation state of the vehicle in real time, effectively utilizes the display area, and improves the utilization rate of the display area. Alternatively, the schematic diagram of the navigation view may be a playback of the demonstration animation of the navigation. Alternatively, the display state of the navigation button may be a combination of some of the schematic diagrams of the navigation views.

Hereinafter, a view display control method will be described in detail with reference to a specific example.

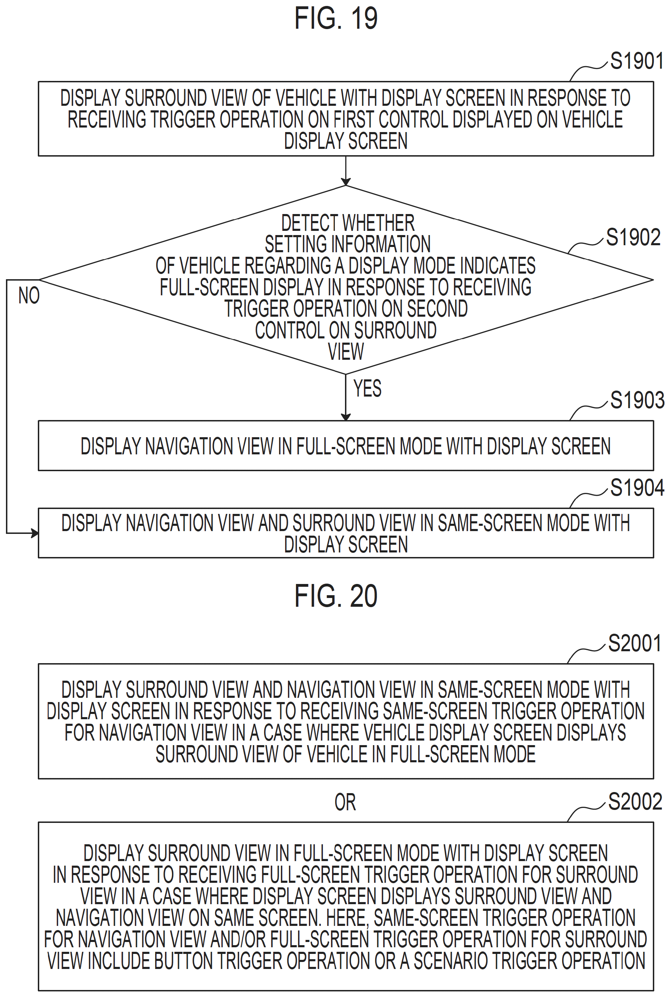

As shown in FIG. 19, the view display control method of the example of the present disclosure mainly includes steps S1901 to S1904.

Step S1901: display the surround view of the vehicle with the display screen in response to receiving a trigger operation on a first control (for example, the surround view button B1 in the toolbar) displayed on the vehicle display screen;

In step S1902, detect whether the setting information of the vehicle regarding a display mode indicates full-screen display (first display mode) in response to receiving a trigger operation on the second control (for example, navigation button B5 in the view) in the surround view, and in a case where the full-screen display is indicated, step S1903 is executed, and in a case where the full-screen display is not indicated (same-screen display (second display mode)), step S1904 is executed.

In step S1903, display the navigation view in the full-screen mode with the display screen.

In step S 1904, display the navigation view and the surround view in the same-screen mode with the display screen.

The view display control method of the example of the present disclosure displays the surround view of the vehicle in full-screen mode by the display screen in response to receiving a trigger operation for the first control displayed on the vehicle display screen, and displays the navigation view in full-screen mode by the display or displays the navigation view and the surround view on the same screen by the display screen in response to receiving a trigger operation for the second control displayed on the display screen, in which the second control is different from the first control. As a result, the surround view and/or the navigation view can be opened by a single trigger operation, the operation step of opening the surround view and/or the navigation view is simplified, the convenience of the operation is improved, and the dispersion of the driver's attention is reduced. At the same time, the view display method is enriched, the user can select a corresponding view display method as needed, and the user experience is improved.

In a case where the user selects the second display mode, in order to reduce the operation burden of the driver's view switching with respect to switching between the full-screen display of the surround view and the same-screen display of the navigation view and the surround view, the example of the present disclosure provides a view display control method, and as shown in FIG. 20, the view display control method of the example of the present disclosure includes the following main steps S2001 or S2002.

In step S2001, display the surround view and the navigation view in the same-screen mode with the display screen (see FIG. 4C) in response to receiving a same-screen trigger operation for the navigation view in a case where the vehicle display screen displays the surround view of the vehicle in the full-screen mode (see FIG. 4B).

Or, in step S2002, display the surround view in the full-screen mode with the display screen in response to receiving a full-screen trigger operation for the surround view (see FIG. 4B) in a case where the display screen displays the surround view and the navigation view on the same screen (see FIG. 4C). Here, the same-screen trigger operation for the navigation view and/or the full-screen trigger operation for the surround view include a button trigger operation or a scenario trigger operation.

Specifically, the view display control method provided in the present example is mainly applied to a driving scenario of the vehicle. In the driving process of the vehicle, the user mainly checks the situation around the vehicle by the surround view displayed on the vehicle display screen, specifies the situation of the vehicle or the obstacle around the vehicle, for example, the left side, the right side, and the rear side of the vehicle, and thus makes a correct vehicle control decision. However, in a case where the user does not know the current section well or is worried about missing a certain intersection or a ramp entrance, the user needs to check the navigation map, and thus it is necessary to display the navigation map at the same time as displaying the surround view. Therefore, it is necessary to switch from the current full-screen display surround view to the same-screen display surround view and the navigation view. Further, in order to facilitate the user to switch the view display of the display screen, the view display control method provided in the present example supports switching between two types of display screens by a single trigger operation, and the two types of display screens are the surround view in full-screen display (see FIG. 4B) and the surround view and the navigation view in same-screen display (see FIG. 4C). In the present example, the switching from the full-screen display surround view to the same-screen display surround view and the navigation view is realized by a same-screen trigger operation for the navigation view, for example, by triggering the navigation button B5 in the view. Alternatively, the switching from the same-screen display surround view and the navigation view to the full-screen display surround view is realized by a full-screen trigger operation for the surround view, for example, by triggering the surround view button B1 in the toolbar. Here, the same-screen trigger operation for the navigation view includes a button trigger operation or a scenario trigger operation, the full-screen trigger operation for the surround view also includes a button trigger operation or a scenario trigger operation. In the present example, the mutual switching between the full-screen display of the surround view and the same-screen display of the surround view and the navigation view is realized by a single trigger operation, and the technical effect achieved is that the operation is easy, the consumption of the driver's attention is reduced, and the driving safety is improved. At the same time, it is also possible to satisfy the need that the user prefers to use the surround view.

The scenario trigger operation is a trigger operation that is not a human input, and for example, in a case where it is detected that the scenario in which the vehicle is located is a specific scenario, the scenario trigger operation automatically triggers the switching of the view display. In the optional embodiment of the present disclosure, the reception of the same-screen trigger operation for the navigation view includes: the same-screen trigger operation for the navigation view including a same-screen scenario trigger operation based on a navigation-applicable scenario; determining that the same-screen scenario trigger operation based on a navigation-applicable scenario is received when it is detected that a current scenario of the vehicle is a navigation-applicable scenario, here, the navigation-applicable scenario includes: the distance between a position of the vehicle and an intersection, a fork in a road, or a ramp entrance of a highway is equal to or less than a predetermined distance. Specifically, by setting the navigation-applicable scenario in advance, it is possible to realize the automatic triggering of the switching from the full-screen display surround view to the same-screen display surround view and the navigation view, that is, in a case where it is detected that the scenario in which the vehicle is located matches the navigation-applicable scenario set in advance, the switching from the full-screen display surround view to the same-screen display navigation view and the surround view is executed, that is, the switching from FIG. 4B to FIG. 4C in FIG. 14 is performed. Here, the navigation-applicable scenario refers to a scenario in which the user needs to check the navigation view based on the position of the vehicle, for example, a scenario in which the vehicle reaches the intersection, the fork in the road, or the ramp entrance of the highway. In this scenario, the user usually needs to specify how to turn, which road to select, and whether to exit the main road from this ramp entrance by using the navigation view. Therefore, in this case, the user usually wants the navigation view to be displayed on the display screen. Therefore, in the present example, in a case where the navigation-applicable scenario is detected, it is specified that the same-screen trigger operation for the navigation view (that is, corresponding to triggering the navigation button B2 in the toolbar or the navigation button B5 in the view) is received, and the display screen is controlled to realize the switching from the full-screen display surround view (FIG. 4B) to the same-screen display surround view and the navigation view (FIG. 4C). It can be understood that the navigation-applicable scenario is not limited to the scenarios listed above. In the present example, the switching from the full-screen display surround view to the same-screen display surround view and the navigation view is automatically triggered by the scenario detection, and the driver is saved from the trouble of manually triggering the switching of the view, making the switching operation of the view smarter.

In the optional embodiment of the present disclosure, the reception of the full-screen trigger operation for the surround view includes that the full-screen trigger operation for the surround view includes the full-screen scenario trigger operation based on the surround-view-applicable scenario, and in a case where it is detected that the scenario in which the vehicle is currently located is the surround-view-applicable scenario, it is specified that the full-screen scenario trigger operation based on the surround-view-applicable scenario is received, and the surround-view-applicable scenario includes that the vehicle is preparing to enter the parking space, the vehicle is in a narrow road segment, the vehicle is passing another vehicle, or the vehicle is changing the lane. Specifically, by setting the surround-view-applicable scenario in advance, it is possible to realize the automatic triggering of the switching from the same-screen display surround view and the navigation view (FIG. 4C) to the full-screen display surround view (FIG. 4B), that is, in a case where it is detected that the scenario in which the vehicle is located matches the surround-view-applicable scenario set in advance, the switching from the same-screen display navigation view and the surround view to the full-screen display surround view is executed. In a case where the vehicle display screen displays the same-screen display surround view and the navigation view (see FIG. 4C), it is detected that the scenario in which the vehicle is located is the surround-view-applicable scenario, and the surround view is displayed in full-screen by the display screen (see FIG. 4B), and the surround-view-applicable scenario includes a scenario in which the vehicle is entering the parking space, the vehicle is passing through a narrow passage, the vehicle needs to yield when the vehicle is passing another vehicle, the vehicle is changing the lane, or the like. In this scenario, the user usually needs to clearly check the distance to other vehicles or obstacles around the vehicle by using the surround view to avoid a situation in which the vehicle rubs against other vehicles or obstacles. Therefore, in this case, the user usually wants the surround view to be displayed more clearly on the display screen (the effect of the full-screen display surround view is better than the effect of the same-screen display surround view), and thus, in the present example, in a case where the surround-view-applicable scenario is detected, it is determined that the full-screen trigger operation for the surround view is received (corresponding to triggering the surround view button B1 in the toolbar), and the view display is controlled to switch from the same-screen display surround view and the navigation view of the vehicle display screen to the full-screen display surround view. In the present example, the switching from the same-screen display surround view and the navigation view to the full-screen display surround view is automatically triggered by the scenario detection, and the driver is saved from the trouble of manually triggering the switching of the view, making the switching operation of the view smarter.

In the optional embodiment of the present disclosure, the same-screen trigger operation for the navigation view includes the trigger operation by the navigation button, the surround view displayed in the full-screen mode includes the navigation button, and displaying the surround view and the navigation view in the same-screen mode by the display screen in response to receiving the same-screen trigger operation for the navigation view includes displaying the surround view and the navigation view in the same-screen mode by the display screen in response to receiving the trigger operation for the navigation button. Specifically, in a case of the full-screen display surround view, the navigation button is displayed in the surround view (see FIG. 4B). The role of this navigation button (navigation button B5 in the view displayed at the lower right corner of FIG. 4B) is to open the navigation view. The driver can switch the view display from the full-screen display surround view to the same-screen display surround view and the navigation view by clicking the navigation button B5 in the view of the surround view, that is, can switch from FIG. 4B to FIG. 4C.

In the optional embodiment of the present disclosure, the navigation button is provided at the lower right corner of the surround view (navigation button B5 in the view displayed at the lower right corner of FIG. 4B) and/or the navigation button is a floating button. The default position of the navigation button is the lower right corner of the surround view. The user can drag and move the navigation button B5 to a position convenient for the trigger of the view, for example, the lower left corner of the surround view, according to the individual needs. In the present example, the movement of the position of the navigation button is supported, and the position of the navigation button is set to satisfy the need of the driver, so that the driver can easily open the navigation view by the navigation button, and the convenience of the driver in opening the navigation view is improved.

In the optional embodiment of the present disclosure, the display state of the navigation button (navigation button B5 in the view displayed at the lower right corner of FIG. 4B) is a schematic diagram of the navigation view, and the schematic diagram of the navigation view is used to display the navigation route dynamically and in real time. In order for the driver to intuitively and clearly understand the role of the navigation button and reduce the erroneous operation, the display state of the navigation button can be designed in the form of the schematic diagram of the navigation view (navigation button B5 in the view displayed at the lower right corner of FIG. 4B), whereby the user can clearly know the use of the button based on the appearance of the navigation button, and the possibility of the erroneous operation is reduced. The schematic diagram of the navigation view can also display the navigation route dynamically and in real time, and the driver can understand the outline of the traveling path even in a case of the full-screen display surround view by the navigation route displayed by the schematic diagram. In another example of the present disclosure, the navigation button displays a traffic congestion status of the navigation route in real time. Specifically, the display state of the navigation button is a schematic diagram of the navigation view, and the congestion status of each segment is indicated by different indicators on the navigation route displayed in the schematic diagram, for example, a segment that is not congested is indicated in green, a segment that is congested is indicated in red, the degree of congestion is indicated by the shade of red, and further, for example, a solid line indicates a segment that is congested, and a broken line indicates a segment that is not congested in the display of the navigation route.

The schematic diagram of the navigation view may be a classic style of the navigation view so that the user can easily understand the use of the navigation button, which may be a still image, or the schematic diagram of the navigation view may be created based on all or a part of the real-time navigation view in the traveling process of the host vehicle, whereby the schematic diagram of the navigation view can be used as the use of the button, and the user can understand the current navigation state of the vehicle in real time, and the display area can be effectively utilized to improve the utilization rate of the display area. Alternatively, the schematic diagram of the navigation view may be a playback of the demonstration animation of the navigation. Alternatively, the display state of the navigation button may be a combination of some of the schematic diagrams of the navigation views.

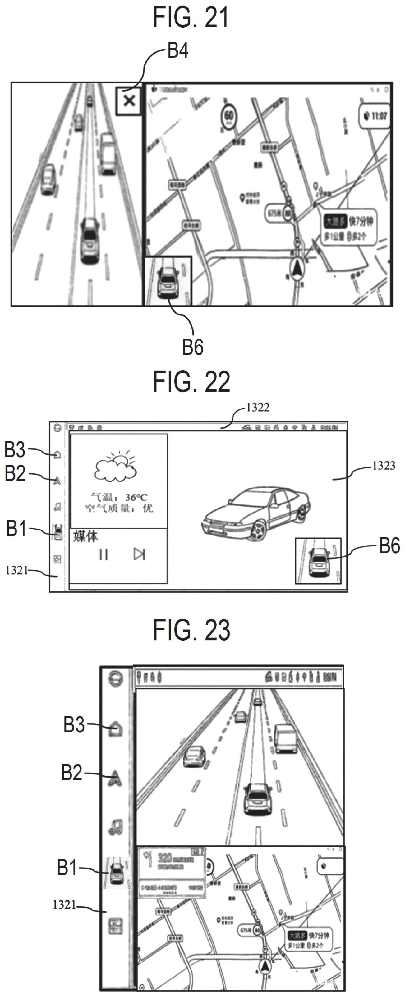

In the optional embodiment of the present disclosure, the full-screen trigger operation for the surround view includes a trigger operation for a surround view button, and in a case where the display screen displays the surround view and the navigation view in the same-screen mode and does not display the toolbar, the surround view button is displayed in the surround view and/or the navigation view. As shown in FIG. 21, the surround view button B6 in the view is displayed in the navigation view displayed on the same screen. In response to receiving the full-screen trigger operation for the surround view, that is, in response to triggering the surround view button B6 in the view shown in FIG. 21, the surround view is displayed on the display screen in the full-screen mode. This includes: in response to receiving the trigger operation for the surround view button, the surround view is displayed on the display screen in the full-screen mode.

The surround view button (the surround view button B6 in the view shown in FIG. 21) provided in the present example is used to open the full-screen displayed surround view in a case where the toolbar is not displayed. The surround view button is located in the surround view and/or the navigation view displayed on the same screen. The driver can switch the surround view and the navigation view (FIG. 4C) displayed on the same screen to the full-screen displayed surround view (FIG. 4B) by triggering the surround view button. Accordingly, the technical effect that the full-screen displayed surround view can be entered with one touch in the same-screen mode without displaying the toolbar is achieved, and the convenience of switching the view is improved. Here, the surround view button may be a floating button, whereby it is easy for the driver to adjust the position of the surround view button according to the personal needs, and the needs of different users can be satisfied.

In the optional embodiment of the present disclosure, the method further includes, in a case where the display screen displays the navigation preparation view, in response to receiving a trigger operation for a surround view button (the surround view button B6 in the view as shown in FIG. 22) on the navigation preparation view, to display the surround view on the display screen in the full-screen mode. Here, the navigation preparation view refers to a screen displayed by the display screen before entering the navigation view and/or the surround view, for example, a system home screen, a music playback screen, a radio interface, or the like.

The surround view button provided in the present example achieves the technical effect of switching from the navigation preparation view to the full-screen displayed surround view with one touch, so that the operation of entering the surround view from the navigation preparation view is easy and quick, and the exhaustion of the driver is reduced. Here, the surround view button may be a floating button, and the driver can easily move the position of the surround view button according to personal needs with reference to the surround view button shown in FIG. 22. The surround view button may be provided in the toolbar of the navigation preparation view, with reference to the surround view button B1 in the toolbar shown in FIGS. 4A and 18. The driver switches the currently displayed navigation preparation view to the full-screen displayed surround view by triggering the surround view button in the navigation preparation view in FIG. 22.

In the optional embodiment of the present disclosure, displaying the surround view and the navigation view in the same-screen mode by the display screen includes displaying the navigation view on the display screen in the full-screen mode and displaying the surround view on an upper layer over a portion of the navigation view. The same-screen display mode of the present example is a mode in which the surround view and the navigation view are displayed in a layered manner. One view can be set as a background view, and the other view can be disposed on the upper layer as a foreground view. It can be understood that the size of the view on the upper layer must be smaller than the size of the view on the lower layer in order to prevent all the views on the lower layer from being shielded. In addition, displaying the surround view and the navigation view in a layered manner can optimize the layout of the view, make the view more beautiful and orderly, improve the visual experience, and reduce visual fatigue during the driving process.

In the optional embodiment of the present disclosure, displaying the surround view and the navigation view in the same-screen mode by the display screen includes displaying the surround view with the first part of the display screen and displaying the navigation view with the second part of the display screen, and there is no overlapping region between the second part and the first part. Here, displaying the surround view and the navigation view on the same screen by the in-vehicle display screen specifically means displaying the surround view by a part of the in-vehicle display screen and displaying the navigation view by another part of the in-vehicle display screen. In order to avoid that one view shields the other view and the user cannot sufficiently see the entire image of the view, a part of the display screen for displaying the surround view and a part of the display screen for displaying the navigation view can be provided to be completely different from each other.

In the optional embodiment of the present disclosure, the first part and the second part are in a left-right relationship or an upper-lower relationship on the display screen. The same-screen display of the surround view and the navigation view also vary depending on the size, the shape, and the installation direction in the vehicle of the in-vehicle display screen of different vehicles. In a case where the in-vehicle display screen is configured in a landscape orientation, the first part and the second part may be provided in a left-right relationship, and in a case where the in-vehicle display screen is configured in a portrait orientation, the first part and the second part may be provided in an upper-lower relationship, as shown in FIG. 23 (wherein the upper part displays the surround view, and the lower part displays the navigation view).

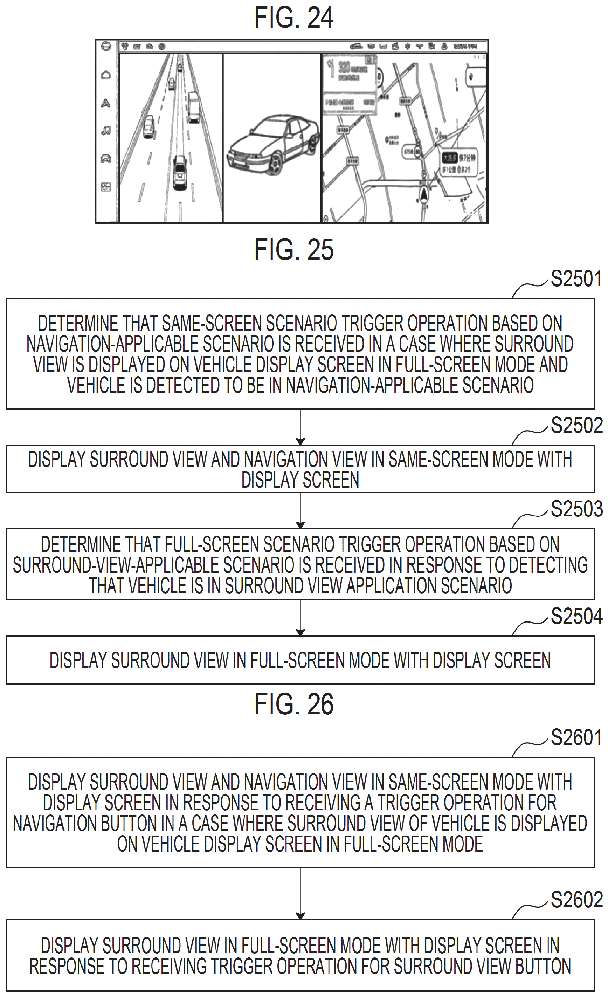

In the optional embodiment of the present disclosure, the method further includes displaying the surround view and the navigation view on the display screen in the same-screen mode, and at the same time, displaying the system home screen with the third part of the display screen, and the third part does not have an overlapping area with the first part and the second part, as shown in FIG. 24. In order to satisfy the need for the user to not only check the surround view and the navigation view during driving but also perform other system settings such as music playback, the in-vehicle display screen may be divided into three parts, the first part may be used to display the surround view, the second part may be used to display the navigation view, and the third part may be used to display a system setting button.

Hereinafter, a view display control method will be described by way of example.

As shown in FIG. 25, the view display control method of the example of the present disclosure mainly includes steps S2501 to S2504.

In step S2501, determine that the same-screen scenario trigger operation based on the navigation-applicable scenario is received in a case where the surround view is displayed on the vehicle display screen in the full-screen mode and it is detected that the vehicle is in the navigation-applicable scenario.

Here, the navigation-applicable scenario includes: the distance between the position of the vehicle and an intersection, a fork in a road, or a ramp entrance of a highway is equal to or less than a predetermined distance.

In step S2502, display the surround view and the navigation view in the same-screen mode with the display screen (see FIG. 4C in FIG. 14).

In step S2503, determine that the full-screen scenario trigger operation based on the surround-view-applicable scenario is received in response to detecting that the vehicle is in the surround-view-applicable scenario.

Here, the surround-view-applicable scenario includes: the vehicle preparing to enter a parking space, the vehicle being in a narrow road segment, the vehicle passing another vehicle, or the vehicle changing a lane.

In step S2504, display the surround view in the full-screen mode with the display screen (see FIG. 4B).

Hereinafter, a view display control method will be described by way of example with reference to another specific example.

As shown in FIG. 26, the view display control method of the example of the present disclosure mainly includes steps S2601 to S2602.

In step S2601, display the surround view and the navigation view in the same-screen mode with the display screen in response to receiving a trigger operation for a navigation button (see FIG. 4C) in a case where the surround view of the vehicle is displayed on the vehicle display screen in the full-screen mode (see FIG. 4B).

Here, the surround view displayed in the full-screen mode includes a navigation button (as shown in FIG. 4B, a navigation button B5 included in the view), the display state of the navigation button is a schematic diagram of the navigation view, and the schematic diagram of the navigation view is used to dynamically and in real time display a navigation route. The navigation button displays a traffic congestion status of the navigation route in real time.

In step S2602, display the surround view in the full-screen mode with the display screen in response to receiving a trigger operation for the surround view button (see FIG. 4B).

Here, in a case where the display screen displays the surround view and the navigation view in the same-screen mode and does not display the toolbar, the surround view button is displayed on the surround view and/or the navigation view (see FIG. 21).

In the view display control method of the example of the present disclosure, in a case where the surround view of the vehicle is displayed on the vehicle display screen in the full-screen mode, in response to receiving a same-screen trigger operation for the navigation view, the surround view and the navigation view are displayed in the same-screen mode by the display screen, or in a case where the surround view and the navigation view are displayed on the display screen in the same-screen mode, in response to receiving a full-screen trigger operation for the surround view, the surround view is displayed on the display screen in the full-screen mode. Here, the same-screen trigger operation for the navigation view and the full-screen trigger operation for the surround view include a button trigger operation or a scenario trigger operation. As a result, mutual switching between the full-screen display of the surround view and the same-screen display of the surround view and the navigation view can be achieved by a single trigger operation, the operation is convenient, the consumption of user attention is reduced, the driving safety is improved, and the need for the user to prefer to use the surround view is satisfied.

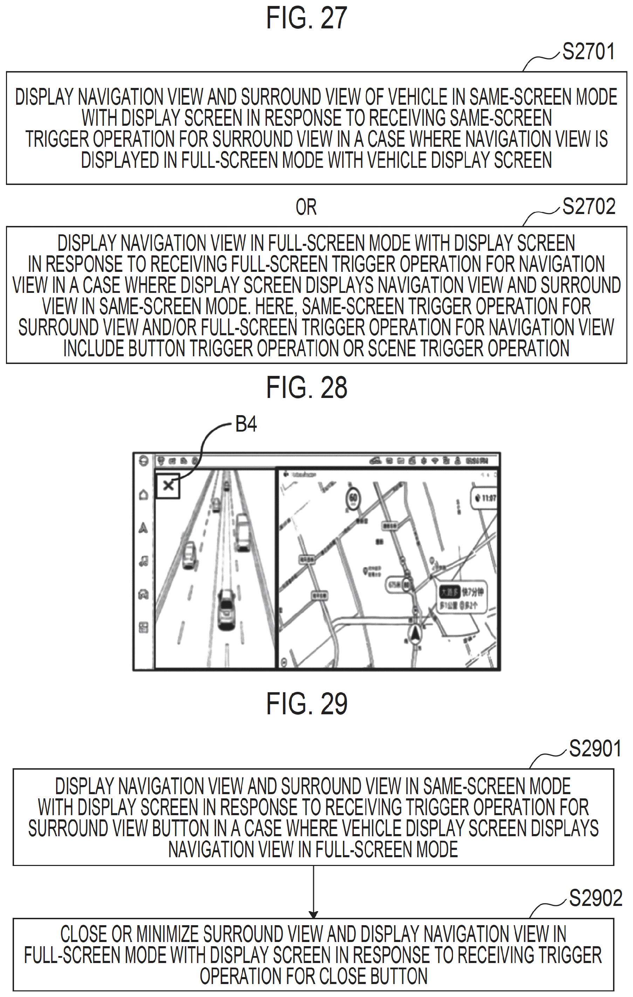

In a case where the user selects the second display mode, in order to reduce the operation burden of the driver for switching between the full-screen display of the navigation view and the same-screen display of the navigation view and the surround view, the example of the present disclosure provides a view display control method including step S2701 or step S2702 as shown in FIG. 27.

In step S2701, display the navigation view and the surround view of the vehicle in the same-screen mode with the display screen (see FIG. 4C), in response to receiving a same-screen trigger operation for the surround view (for example, triggering a surround view button B6 included in the view shown in FIG. 4D) in a case where the navigation view is displayed on the vehicle display screen in the full-screen mode (see FIG. 4D).

Or, in step S2702: display the navigation view in the full-screen mode with the display screen (see FIG. 4D) in response to receiving a full-screen trigger operation for the navigation view (for example, triggering a close button B4 shown in FIG. 4C) in a case where the display screen displays the navigation view and the surround view in the same-screen mode (see FIG. 4C). Here, the same-screen trigger operation for the surround view and/or the full-screen trigger operation for the navigation view include a button trigger operation or a scenario trigger operation.

The view display control method of the present example is mainly applied to the traveling process of the vehicle. In the traveling process of the vehicle, the driver mainly checks a traveling route by the navigation view, and in a case where there are many surrounding vehicles, a passage of the vehicle is narrow, an obstacle is present around the vehicle, or the like, it is necessary to open the surround view of the vehicle, understand a situation around the vehicle by the surround view, and make a correct control decision, for example, a lane change, moving to the left, or moving to the right, or the like. In order to reduce the consumption of the driver's attention, in the present example, the full-screen display of the navigation view (see FIG. 4D) can be switched to the same-screen mode of the navigation view and the surround view (see FIG. 4C) by a single trigger operation, and it is not necessary to manually drag a frame of the navigation view to adjust a size of the navigation view as in the related art, so that the operation of switching the view is convenient, the consumption of the driver's attention is reduced, and the driving safety is improved. In a case where the vehicle display screen displays the navigation view and the surround view in the same-screen mode, the driver can also switch the navigation view to a full-screen display mode by a single trigger operation, but the achieved technical effect is that the operation is convenient, the consumption of the driver's energy is reduced, and the driving safety is improved.

Here, the same-screen trigger operation for the surround view may include a button trigger operation (for example, triggering a surround view button B6 included in the view shown in FIG. 4D) and a scenario trigger operation, and the full-screen trigger operation for the navigation view (for example, triggering a close button B4 shown in FIG. 4C) may also include a button trigger operation or a scenario trigger operation. The scenario trigger operation refers to determining that a corresponding trigger operation is received in a case where it is detected that the vehicle is in a target scenario.

In the optional example of the present disclosure, the navigation view displayed in the full-screen mode includes a surround view button (a surround view button B6 included in the view shown in FIG. 4D), and preferably, the display state of the surround view button includes a schematic diagram of the surround view. Displaying the navigation view and the surround view of the vehicle in the same-screen mode by the display screen in response to receiving a same-screen trigger operation for the surround view includes displaying the navigation view and the surround view in the same-screen mode by the display screen in response to receiving a trigger operation for the surround view button.

Specifically, in a case where the vehicle displays the navigation view in the full-screen mode, the surround view button is displayed on the navigation view (see FIG. 4D). The role of the surround view button is to turn on the surround view. The driver can switch the view display from the mode in which the navigation view is displayed in the full-screen mode to the mode in which the navigation view and the surround view are displayed on the same screen by clicking the surround view button in the navigation view. In order to allow the user to intuitively understand the role of the surround view button and avoid erroneous operation, the display state of the surround view button can be designed in the form of a schematic diagram of the surround view, such as the surround view button B6 included in the view shown in FIG. 4D, and thus the user can clearly know the role of the button and avoid a situation of erroneous operation.

Further, the schematic diagram of the surround view may be a classical style of the surround view of the vehicle, or may be a still image, such that the user can more easily understand or know the use of the button. Alternatively, the schematic diagram of the surround view may be a full or partial dynamic image of the surround view generated based on the real-time state of the surroundings of the host vehicle, so that the schematic diagram of the surround view not only serves as the button but also allows the user to timely understand the real-time dynamics of the surroundings of the host vehicle, effectively utilizes the display area, and improves the utilization rate of the display area. Alternatively, the schematic diagram of the surround view may be a playback of the demonstration animation of the vehicle surround view. The display state of the surround view button may be a combination of some of the schematic diagrams of the surround views.

In the optional example of the present disclosure, the surround view button is provided at a lower right of the navigation view (see FIG. 4D), and the method further includes moving another button originally positioned at a lower left of the navigation view to a lower right of the navigation view in response to dragging the surround view button to a lower left of the navigation view. Here, the other button may include a personalization setting button such as background selection and navigation mode selection of the navigation view. In the present example, the positions of the other button and the surround view button are exchanged to allow the driver to easily switch the view by the surround view button by bringing the surround view button closer to the driver, and thus convenience of the driver in switching the view is improved.

In the optional example of the present disclosure, the method further includes, in a case where the navigation view and the surround view are displayed in the same-screen mode, the navigation view does not include the surround view button and the surround view includes a close button (close button B4 shown in FIG. 4C), and displaying the navigation view in the full-screen mode by the display in response to receiving a full-screen trigger operation for the navigation view includes closing or minimizing the surround view and displaying the navigation view in the full-screen mode by the display screen (FIG. 4D) in response to receiving a trigger operation for the close button (for example, triggering the close button B4 shown in FIG. 4C). After switching from displaying the navigation view in a full-screen mode to displaying the navigation view and the surround view in the same-screen mode, it is not necessary to open the surround view again, and thus the surround view button is not displayed in the navigation view and the close button is displayed in the surround view. Here, the role of the close button is to close or minimize the surround view. That is, in a case where the navigation view and the surround view are displayed on the same screen, in a case where the user no longer needs the surround view, the user can close the surround view or minimize the surround view by clicking the close button. The surround view is closed at the same time as the navigation view is switched to the full-screen display state.

In the optional example of the present disclosure, the display state of the close button includes a cross mark; and/or the close button is positioned on a left side of the surround view. As shown in FIG. 28, B4 represents the close button, and the driver can easily close the surround view and switch the view display to the full-screen display of the navigation view, thereby meeting the driver's needs for the view display.

In the example of the present disclosure, in order to simplify an operation step of the user entering the surround view in the full-screen display, in the optional example of the present disclosure, the display screen further displays the surround view button provided in the toolbar. As shown in FIG. 18, the surround view button is provided in the lower toolbar. The method further includes displaying the surround view in the full-screen mode by the display screen in response to receiving a trigger operation for the surround view button. Specifically, in a case where the display screen displays the surround view in the non-full-screen display (for example, the system home screen, the navigation view in the full-screen display, the navigation view and the surround view in the same-screen display, and the like), the driver can trigger the surround view button in the lower toolbar to switch from the currently displayed view to the surround view in the full-screen display, thereby achieving the technical effect. In the present example, the one-touch triggering for displaying the surround view in the full-screen display is realized, thereby avoiding a situation in which, when the user switches to the surround view in the full-screen display, the number of operation steps is large, attention is distracted, and driving safety is affected.

In a case where the navigation view and the surround view are displayed on the same screen, the surround view may be provided on a left side of the display screen, the surround view may be provided on a right side of the display screen, or the surround view may be provided in a format defined by the user to better satisfy the needs of the user for the view display. In the preferred example of the present disclosure, in a case where the navigation view and the surround view are displayed in the same-screen mode, the surround view is positioned on the left side of the display screen.

In addition to the method of manually switching the view in the above example, the view can also be switched by a scenario trigger. In the optional example of the present disclosure, the same-screen trigger operation for the surround view includes the same-screen scenario trigger operation based on the surround-view-applicable scenario, the full-screen trigger operation for the navigation view includes the full-screen scenario trigger operation based on the navigation-applicable scenario, the method further includes determining that the same-screen scenario trigger operation based on the surround-view-applicable scenario (corresponding to triggering the surround view button B6 included in FIG. 4D) is received in a case where it is detected that the vehicle is in the surround-view-applicable scenario. The surround-view-applicable scenario includes one or more of preparation for entering a parking space, being in a narrow road segment, passing another vehicle, and preparation for changing a lane, and determining that the full-screen scenario trigger operation based on the navigation-applicable scenario (corresponding to triggering the close button B4 included in FIG. 4C) is received in a case where it is detected that the vehicle is in the navigation-applicable scenario. The navigation-applicable scenario includes a case in which a distance between a position of the vehicle and an intersection, a fork in a road, or a ramp entrance of a highway is equal to or less than a predetermined distance.

Specifically, in a case where the display screen displays the navigation view in the full-screen display, a current scenario of the vehicle is detected, and it is determined, based on the driving habit of the user when the vehicle is in the current scenario, that the user needs to check the surround view of the vehicle in the current scenario, that is, the user needs to check the environmental situation around the vehicle, including vehicles, pedestrians, animals, obstacles, and the like. The scenario in which the surround view needs to be used usually includes a case where the user enters a parking lot, a case where the vehicle passes through a relatively narrow passage, a case where the vehicle passes another vehicle, a case where the user prepares for changing a lane, and the like, and at all of these timings, it is necessary to check the surround view. It can be understood that the surround-view-applicable scenario is not limited to the scenarios listed above. The present example realizes the trigger for automatically switching the view by the scenario detection, and makes the view switching operation smarter by saving the driver from the trouble of manually switching the view.

In a case where the display screen displays the navigation view and the surround view on the same screen (see FIG. 4C), a current scenario of the vehicle is detected, and it is determined, based on the driving habit of the user when the vehicle is in the current scenario, that the user needs to check details of the navigation route, for example, the highway exit, the fork in the road, and the like. Therefore, in order for the user to relatively clearly check the details of the navigation route and to ensure the psychological sense of safety of the driver, it is necessary to display the navigation view in the full-screen display. The scenario in which it is necessary to check the full-screen navigation view includes a case where the vehicle approaches an intersection, a case where the vehicle approaches a fork in a road, a case where the vehicle approaches a ramp entrance of a highway, and the like, and in all of these scenarios, it is necessary to check the full-screen navigation view (see FIG. 4D). It can be understood that the navigation-applicable scenario is not limited to the scenarios listed above. The present example realizes the trigger for automatically switching the view by the scenario detection, and makes the view switching operation smarter by saving the driver from the trouble of manually switching the view.

Hereinafter, a view display control method will be described in detail with reference to a specific example.

As shown in FIG. 29, the view display control method of the example of the present disclosure mainly includes steps S2901 to S2902.

In step S2901, display the navigation view and the surround view in the same-screen mode with the display screen (see FIG. 4C), in response to receiving a trigger operation for the surround view button (for example, triggering the surround view button B6 in the view included in FIG. 4D) in a case where the vehicle display screen displays the navigation view in the full-screen mode (see FIG. 4D).

Here, the navigation view displayed in the full-screen mode includes the surround view button, and the display state of the surround view button includes a schematic diagram of the surround view.

In step S2902, close or minimize the surround view and display the navigation view in the full-screen mode with the display screen (see FIG. 4D), in response to receiving a trigger operation for the close button (corresponding to triggering the close button B4 included in FIG. 4C).

Here, in a case where the navigation view and the surround view are displayed in the same-screen mode, the navigation view does not include the surround view button, and the surround view includes the close button.

Hereinafter, a view display control method will be described in detail with reference to another specific example.

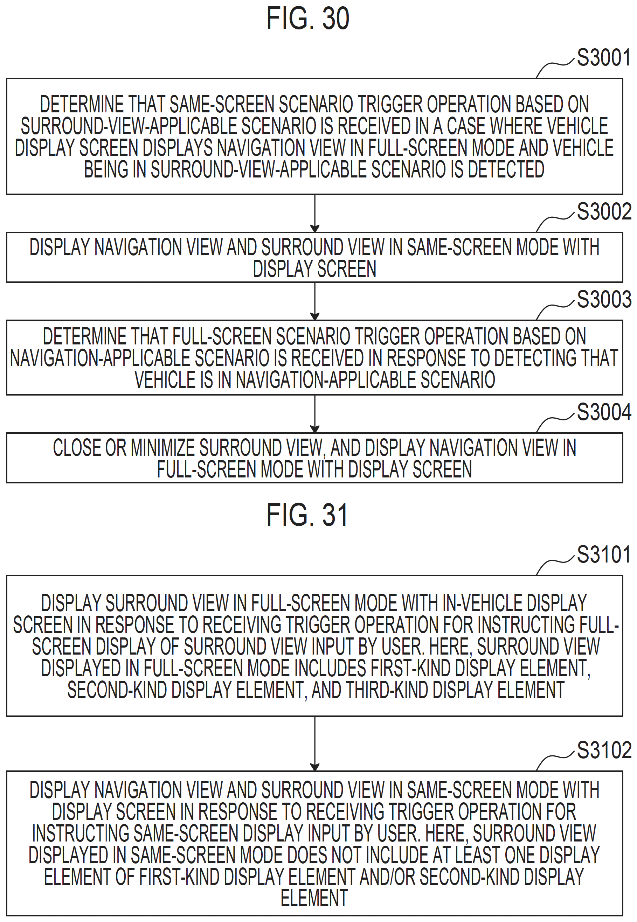

As shown in FIG. 30, the view display control method of the example of the present disclosure mainly includes steps S3001 to S3004.

In step S3001, determine that the same-screen scenario trigger operation based on the surround-view-applicable scenario is received (corresponding to triggering the surround view button B6 in the view included in FIG. 4D) in a case where the vehicle display screen displays the navigation view (see FIG. 4D) in the full-screen mode and the vehicle being in the surround-view-applicable scenario is detected.

Here, the surround-view-applicable scenario includes one or more of entry into a parking space, traveling in a narrow road segment, passing another vehicle, and preparation for a lane change.

In step S3002, display the navigation view and the surround view in the same-screen mode with the display screen (see FIG. 4C).

In step S3003, determine that a full-screen scenario trigger operation based on the navigation-applicable scenario is received in response to detecting that the vehicle is in the navigation-applicable scenario (corresponding to triggering the close button B4 included in FIG. 4C).

Here, the navigation-applicable scenario includes that a distance between the position of the vehicle and an intersection, a fork in a road, or a ramp entrance of a highway is equal to or less than a predetermined distance.

In step S3004, close or minimize the surround view, and display the navigation view in the full-screen mode with the display screen (see FIG. 4D).

It can be understood that the user in the above example may refer to a driver or may refer to a passenger other than the driver in the vehicle, for example, a person who seated in the passenger seat.

In the view display control method of the example of the present disclosure, in a case where the vehicle display screen displays the navigation view in the full-screen mode, the display screen displays the navigation view and the surround view of the vehicle in the same-screen mode in response to receiving the same-screen trigger operation for the surround view, or in a case where the display screen displays the navigation view and the surround view in the same-screen mode, the display screen displays the navigation view in the full-screen mode in response to receiving the full-screen trigger operation for the navigation view. Here, the same-screen trigger operation for the surround view and/or the full-screen trigger operation for the navigation view include the button trigger operation or the scenario trigger operation. As a result, mutual switching between the full-screen display of the navigation view and the same-screen display of the navigation view and the surround view is realized by one trigger operation, the convenience of the operation is improved, excessive distraction of the driver's attention caused by the view switching operation is avoided, the driving safety is improved, and the need for some drivers to prefer to use the navigation view is satisfied.

The above example describes the full-screen display of the surround view and the same-screen display of the surround view, and the size of the displayed surround view is different between the full-screen display of the surround view and the same-screen display of the surround view. In a case where the number of elements included in the surround view displayed in the full-screen mode and the number of elements included in the surround view displayed in the same-screen mode are the same, the surround view displayed in the same-screen mode has a relatively smaller screen, so that the elements included in the surround view appear relatively congested, the display effect of the surround view is relatively poor, and the visual experience of the user for the surround view is relatively poor.

In response to the above situation, the example of the present disclosure provides a view display control method, and FIG. 31 is a schematic diagram of main steps of the view display control method. In the view display control method of the example of the present disclosure, the view display includes the full-screen display of the surround view and the same-screen display of the surround view and the navigation view, and mainly includes steps S3101 to S3102.

In step S3101, display the surround view in the full-screen mode with the in-vehicle display screen in response to receiving a trigger operation for instructing the full-screen display of the surround view input by the user. Here, the surround view displayed in the full-screen mode includes a first-kind display element, a second-kind display element, and a third-kind display element.

In step S3102, display the navigation view and the surround view in the same-screen mode with the display screen in response to receiving the trigger operation for instructing the same-screen display input by the user. Here, the surround view displayed in the same-screen mode does not include at least one display element of the first-kind display element and/or the second-kind display element.

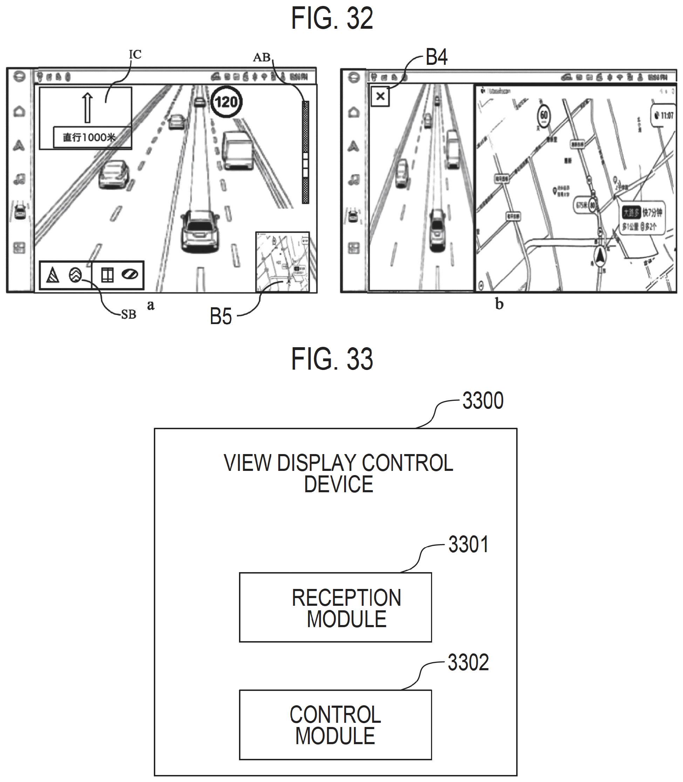

As shown in FIG. 32, a is an example of the surround view displayed in the full-screen mode, and b is an example of the surround view and the navigation view displayed in the same-screen mode. The surround view a displayed in the full-screen mode in FIG. 32 includes an information presentation card IC of the navigation route, a setting bar SB for customizing the driving assistance function, an indicator bar AB of autonomous-driving-supported road segments, a navigation button B5 in the view at the lower right corner, and real-time state information of the periphery of the vehicle. The surround view b displayed in the same-screen mode includes the real-time state information of the periphery of the vehicle and a close button B4, and does not include the information presentation card IC of the navigation route, the setting bar SB for customizing the driving assistance function, the indicator bar AB of the autonomous-driving-supported road segments, or the navigation button B5 in the view at the lower right corner.

In the optional example of the present disclosure, the view display further includes the full-screen display of the navigation view, and in response to receiving a trigger operation for instructing the full-screen display of the navigation view input by the user, the display screen displays the navigation view in the full-screen mode, as shown in FIG. 4C or FIG. 4E.

In a case where the display screen displays the surround view in the full-screen mode, after receiving the trigger operation for instructing the same-screen display, the surround view displayed in the full-screen mode is switched to the same-screen display of the navigation view and the surround view, with reference to the switching from FIG. 4B to FIG. 4C in FIG. 14. In response to receiving the trigger operation for instructing the full-screen display of the navigation view, the surround view displayed in the full-screen mode is switched to the full-screen display of the navigation view, with reference to the switching from FIG. 4B to FIG. 4E in FIG. 13.

Specifically, the surround view includes the third-kind display element, that is, road condition information of the periphery of the vehicle, including information on the vehicle, the pedestrian, the animal, and the still life (lane, traffic sign, obstacle, building, and the like) directly acquired in real time by the vehicle sensor. The surround view displayed in the full-screen mode further includes the first-kind display element and the second-kind display element in order to improve the richness of the information and the function of the full-screen surround view, as shown in a of FIG. 32. The first-kind display element includes driving hint information generated based on the position of the vehicle and the navigation route corresponding to the vehicle, for example, an information presentation card of the navigation route, an indicator bar for autonomous-driving-supported road segments in the navigation route, a schematic diagram of the navigation view, and the like. The second-kind display element includes state identification information of the driving assistance system, for example, a setting button used for customizing the driving assistance function, a setting button for setting the first display mode and the second display mode, and the like. In the present example, the surround view displayed in the full-screen mode provides the user with rich information presentation, provides the user with better reference for driving, and provides the view with the customization item of the driving assistance function, so that the user can easily perform the function setting, and the operation is simple and convenient without complicated operations.

Optionally, the first-kind display element includes at least an information presentation card of the navigation route and/or an indicator bar for autonomous-driving-supported road segments along the navigation route and/or a schematic diagram of the navigation view, and the second-kind display element includes at least a setting bar for customizing a driving assistance function and/or a state identifier of a driving assistance system.

Here, the information presentation card of the navigation route may be, for example, a navigation hint of "go straight for 1000 meters", the indicator bar for autonomous-driving-supported road segments is used to indicate which road segments support autonomous driving and which road segments do not support autonomous driving, the schematic diagram of the navigation view is used to provide the user with an outline of the navigation route, and may be used as a navigation button for the user to open the navigation view. The surround view displayed in the full-screen mode may further include the setting bar for customizing the driving assistance function, the schematic diagram of the navigation view, and the schematic diagram of the indicator bar for autonomous-driving-supported road segments along the navigation route. Here, the upper left corner is the information presentation card IC of the navigation route (see the upper left corner of a in FIG. 32), the lower left corner is the setting bar SB for customizing the driving assistance function (see the lower left corner of a in FIG. 32), the right side is the indicator bar AB for autonomous-driving-supported road segments (see the rightmost side of a in FIG. 32), and the lower right corner is the navigation button, that is, the schematic diagram of the navigation view (see the lower right corner of a in FIG. 32). The surround view displayed in the full-screen mode includes a plurality of display elements, so that the user can acquire the navigation-related information by the surround view, the user can reduce the time and effort to check the navigation information by switching to the navigation view, the user can correct the driving assistance function without ending the current display screen, the convenience of setting the driving assistance function is improved, and the navigation button is provided in the surround view, so that the user can easily and quickly directly call the navigation view, and the driving experience of the user is improved as a whole.

In the optional example of the present disclosure, the surround view displayed in the full-screen mode includes at least the information presentation card of the navigation route and/or the indicator bar for autonomous-driving-supported road segments along the navigation route and/or the schematic diagram of the navigation view, as shown in b of FIG. 32. In a case where the surround view and the navigation view are displayed in the same-screen mode, the surround view does not include at least the information presentation card of the navigation route and/or the indicator bar for autonomous-driving-supported road segments along the navigation route and/or the schematic diagram of the navigation view. The same-screen display of the surround view and the navigation view can refer to the same-screen display of the surround view and the navigation view shown in b of FIG. 32.

In a case of the full-screen display surround view, by displaying the information presentation card of the navigation route and/or the indicator bar for autonomous-driving-supported road segments in the surround view, the basic navigation needs of the user are satisfied, the operation of the user to switch to the navigation view is reduced, the various needs of the user are satisfied by one view, and the driving assistance value of the surround view is improved. In a case of switching to the same-screen mode, the size of the surround view is reduced, so that the number of elements in the view is too large, and in order to avoid excessive density and prevent the display effect of the surround view from being affected, the display elements in the view are reduced. In the same-screen mode, since the navigation view and the surround view are displayed at the same time, it is not necessary to display the information related to the navigation route in the surround view, so that the information presentation card of the navigation route and/or the indicator bar for autonomous-driving-supported road segments and/or the schematic diagram of the navigation view are deleted, thereby making the surround view concise, increasing the identifiability of the view elements, and ensuring the display effect of the surround view.

In the optional example of the present disclosure, the surround view displayed in the full-screen mode includes at least the setting bar for customizing the driving assistance function and/or the state identifier of the driving assistance system. In a case where the surround view and the navigation view are displayed in the same-screen mode, the surround view does not include at least the setting bar for customizing the driving assistance function and/or the state identifier of the driving assistance system. In the present example, by displaying the setting bar for customizing the driving assistance function in the surround view displayed in the full-screen mode, the user can directly set the driving assistance function in the surround view during driving, and the user does not need to move to the system setting page after ending the surround view to correct each driving assistance function item, the operation is simple and quick, and the user experience is improved. Here, the driving assistance function can include adaptive cruise control, automatic emergency braking, blind spot monitoring, lane keeping, and the like, but is not limited thereto, and by the state identifier of the driving assistance system, it is possible to directly see which driving assistance function is currently turned on and the current operation status of the driving assistance function, and the user can grasp the driving assistance state at a glance without having to flip back the page of the system. However, in a case of switching to the same-screen display, in order to ensure the identifiability of the surround view element, the view display element is reduced, the setting bar for customizing the driving assistance function and/or the state identifier of the driving assistance system is deleted, the simplicity and cleanliness of the surround view displayed in the same-screen mode are maintained, and the display effect of the surround view is ensured.

In the optional example of the present disclosure, the setting bar for customizing the driving assistance function includes a button for setting the driving assistance mode. In a case where the setting bar for customizing the driving assistance function is included in the surround view displayed in the full-screen mode, one or more buttons for setting the driving assistance mode are provided in the setting bar. Here, the driving assistance mode includes one or a plurality of the relaxation mode, the aggressive mode, and the standard mode. Since the button for switching the driving mode needs to be displayed in the surround view, the fewer the number of buttons to be set, the simpler the surround view, so that the button for switching the driving assistance mode can be set to one. In a case where the button is triggered once, the driving assistance mode is switched once, for example, from the current driving assistance mode A to the driving assistance mode B. In a case where the operation of triggering the button is received a plurality of times (for example, three times) within a predetermined duration (for example, 3 seconds), it is not necessary to switch the driving mode three times, and the three types of driving modes can be traversed for three times of the trigger operation, the third driving mode that is traversed can be determined as the target driving assistance mode, and the driving mode can be switched to the target driving assistance mode. For example, in a case where the current driving assistance mode is the mode A and the trigger operation is received three times, first, the mode B is traversed, then the mode C is traversed, and further, the mode D is traversed, and the mode D is determined as the target driving assistance mode, and the mode is switched from the mode A to the mode D. The switching order of the plurality of driving modes may be set in advance, or may be defined by the user. In the present example, the mode switching is executed only once for a plurality of consecutive trigger operations, the vehicle is prevented from executing unnecessary operations, and the calculation resources are saved.

In order to facilitate the user to switch the driving mode with one click and reduce the number of operations, one specific button is provided for each of the different driving modes, and in a case where the button is triggered, the mode can be switched from the current mode to the mode corresponding to the triggered button, so that a plurality of switching buttons for the driving assistance mode can be provided. For example, there are four driving assistance modes A, B, C, and D, and four buttons are provided for each of the four driving assistance modes. Optionally, in order to display the driving assistance mode corresponding to each of the plurality of buttons more intuitively, the appearance of the plurality of buttons can be designed to have different identifiers, and the features of the corresponding driving mode can be intuitively reflected by the different identifiers, thereby preventing the user from making an erroneous operation and improving the operation efficiency of the user.

In the optional embodiment of the present disclosure, in response to receiving a voice command for customizing the driving assistance function, the setting operation of the driving assistance function item instructed by the voice command is executed. In the present example, in a case where the navigation view and the surround view are displayed at the same time, in a case where the user needs to correct the setting of the driving assistance function, in order to avoid the user exiting the current display screen and then opening the system setting page to correct the function setting, a method of correcting the setting of the driving assistance function by the voice command is provided, and the user is prevented from correcting the function setting through a troublesome manual operation step, and the user is provided with a smart experience of the function setting. Since it is not necessary to end the current display screen and the user does not need to perform a manual operation, the consumption of the driver's attention is reduced, and the driving safety is improved.

Hereinafter, how the view is switched and how the display elements are increased or decreased will be illustratively described using one specific example. In a case where the in-vehicle display screen displays the surround view in full screen (see a of FIG. 32), the surround view includes display elements including, for example, an information presentation card of the navigation route, a setting bar for customizing the driving assistance function, a schematic diagram of the navigation view, an indicator bar for autonomous-driving-supported road segments along the navigation route, and/or a state identifier of the driving assistance system. In a case where the user triggers the navigation button, the display content of the display screen is switched to display the navigation view and the surround view on the same screen (see b of FIG. 32). The surround view in the same-screen mode does not include one or a plurality of the information presentation card of the navigation route, the setting bar for customizing the driving assistance function, the schematic diagram of the navigation view, the indicator bar for autonomous-driving-supported road segments along the navigation route, and the state identifier of the driving assistance system. The user can switch the mode from the mode in which the navigation view and the surround view are same-screen displayed to the mode in which the surround view is displayed in full screen by triggering the surround view button with respect to the surround view and the navigation view that are same-screen displayed by the display screen. Here, the surround view displayed in full screen includes one or a plurality of the information presentation card of the navigation route, the setting bar for customizing the driving assistance function, the schematic diagram of the navigation view, the indicator bar of a road segment that supports autonomous driving along the navigation route, and the state identifier of the driving assistance system.

In the view display control method of the example of the present disclosure, the number of display elements in the surround view is adjusted according to different display modes, so that the richness of the information and functions of the full-screen surround view is ensured, and at the same time, the identifiability of the display elements of the surround view displayed at the same time is improved, thereby improving the display effect of the view and improving the user experience.

As shown in FIG. 33, a view display control device 3300 of an optional example of the present disclosure includes a reception module 3301 that receives a touch operation input by the user via the in-vehicle display screen, and a control module 3302 that controls the view display on the in-vehicle display screen based on the touch operation.

The view display control device 3300 of the example of the present disclosure includes the first display mode and the second display mode, in which the first display mode includes displaying the navigation view in full screen and displaying the surround view in full screen by the in-vehicle display screen, the second display mode includes displaying the navigation view in full screen by the display screen, displaying the surround view in full screen, and displaying the navigation view and the surround view on the same screen, displaying the navigation view and the surround view on the same screen includes displaying the navigation view and the surround view at the same time by the display screen, and the user selects the first display mode or the second display mode by setting.

The view display control device of the example of the present disclosure supports the user to set the view display mode by himself/herself, so that the navigation view and/or the surround view can be displayed in the display method designated by the user, and the display method of the view is made more appropriate according to the needs of the user, thereby improving the experience of the user.

In an optional example of the present disclosure, the view display control device 3300 controls the display screen to display the surround view of the vehicle in full screen according to the trigger operation for the first control by the control module 3302 in response to the reception module 3301 receiving the trigger operation for the first control displayed on the vehicle display screen. The view display control device 3300 controls the display screen to display the navigation view in full screen, or controls the display screen to display the navigation view and the surround view on the same screen according to the trigger operation for the second control by the control module 3302 in response to the reception module 3301 receiving the trigger operation for the second control displayed on the display screen, where the second control is different from the first control.

The view display control device of the example of the present disclosure displays the surround view and/or the navigation view by a single trigger operation, simplifies the operation procedure of displaying the surround view and/or the navigation view, improves the convenience of the operation, and reduces the dispersion of the attention of the driver, and at the same time, enriches the display method of the view, and enables the user to select the display method of the corresponding view according to the need, thereby improving the user experience.

In an optional example of the present disclosure, in a case where the vehicle display screen displays the surround view of the vehicle in the full-screen mode, the view display control device 3300 controls the display screen to display the surround view and the navigation view in the same-screen mode by the control module 3302 in response to the reception module 3301 receiving the same-screen trigger operation for the navigation view. Alternatively, in a case where the display screen displays the surround view and the navigation view in the same-screen mode, the view display control device 3300 controls the display screen to display the surround view in the full-screen mode by the control module 3302 in response to the reception module 3301 receiving the full-screen trigger operation for the surround view. Here, the same-screen trigger operation for the navigation view and/or the full-screen trigger operation for the surround view include the button trigger operation or the scenario trigger operation.

The view display control device of the example of the present disclosure realizes mutual switching between the full-screen display of the surround view chart and the same-screen display of the surround view and the navigation view by a single trigger operation, the operation is easy, the consumption of user attention is reduced, the safety of the driving is improved, and the need that the user prefers to use the surround view is satisfied.

In an optional example of the present disclosure, in a case where the vehicle display screen displays the navigation view in the full-screen mode, the view display control device 3300 controls the display screen to display the navigation view and the surround view of the vehicle in the same-screen mode by the control module 3302 in response to the reception module 3301 receiving the same-screen trigger operation for the surround view. Alternatively, in a case where the display screen displays the navigation view and the surround view in the same-screen mode, the view display control device 3300 controls the display screen to display the navigation view in the full-screen mode by the control module 3302 in response to the reception module 3301 receiving the full-screen trigger operation for the navigation view. Here, the same-screen trigger operation for the surround view and/or the full-screen trigger operation for the navigation view include the button trigger operation or the scenario trigger operation.

The view display control device of the example of the present disclosure realizes mutual switching between the full-screen display of the navigation view and the same-screen display of the navigation view and the surround view by a single trigger operation, improves the convenience of the operation, avoids the switching operation of the view excessively dispersing the attention of the driver, improves the safety of the driving, and satisfies the need that some drivers prefer to use the navigation view.

In an optional example of the present disclosure, in the view display control device 3300 of the example of the present disclosure, the view display includes the full-screen display of the surround view and the same-screen display of the surround view and the navigation view. The control module 3302 controls the in-vehicle display screen to display the surround view in full screen in response to the reception module 3301 receiving the trigger operation for instructing the full-screen display of the surround view input by the user. The surround view displayed in the full-screen mode includes the first-kind display element, the second-kind display element, and the third-kind display element. The control module 3302 controls the display screen to display the navigation view and the surround view in the same-screen mode in response to the reception module 3301 receiving the trigger operation for instructing the same-screen display input by the user. The surround view displayed in the same-screen mode does not include at least one display element of the first-kind display element and/or the second-kind display element.

In the view display control device of the embodiment of the present disclosure, the number of display elements in the surround view is adjusted depending on different display modes, so that the richness of information and functions of the full-screen surround view is ensured, and at the same time, the identifiability of display elements in the same-screen surround view is improved, thereby improving the display effect of the view and improving the user experience.

The example of the present disclosure further provides a vehicle including one or a plurality of processors, and a storage device for storing one or a plurality of programs, in which in a case where the one or the plurality of programs are executed by the one or the plurality of processors, the one or the plurality of processors are caused to implement the view display control method of the example of the present disclosure.

The view display of the example of the present disclosure includes the first display mode and the second display mode, in which the first display mode includes displaying the navigation view in full screen and displaying the surround view in full screen by the in-vehicle display screen. The second display mode includes displaying the navigation view in full screen, displaying the surround view in full screen, and displaying the navigation view and the surround view on the same screen by the display screen. Displaying the navigation view and the surround view on the same screen includes displaying the navigation view and the surround view at the same time by the display screen. The user selects the first display mode or the second display mode by setting.

The vehicle of the example of the present disclosure supports the user to set the view display mode by himself/herself, so that the navigation view and/or the surround view can be displayed in the display method designated by the user, the display method of the view is further adapted to the needs of the user, and the experience of the user is improved.

In an optional example of the present disclosure, the vehicle displays the surround view of the vehicle in full screen by the display screen in response to receiving the trigger operation for the first control displayed on the vehicle display screen, and the vehicle displays the navigation view in full screen or displays the navigation view and the surround view on the same screen by the display screen in response to receiving the trigger operation for the second control displayed on the display screen, where the second control is different from the first control.

The vehicle of the example of the present disclosure opens the surround view and/or the navigation view by a single trigger operation, simplifies the operation procedure of opening the surround view and/or the navigation view, improves the convenience of the operation, and reduces the dispersion of the attention of the driver, and at the same time, enriches the display method of the view, enables the user to select the display method of the corresponding view according to the need, and improves the experience of the user.

In an optional example of the present disclosure, in a case where the vehicle display screen displays the surround view of the vehicle in the full-screen mode, the vehicle controls the display screen to display the surround view and the navigation view in the same-screen mode in response to receiving the same-screen trigger operation for the navigation view, or in a case where the display screen displays the surround view and the navigation view in the same-screen mode, the vehicle controls the display screen to display the surround view in the full-screen mode in response to receiving the full-screen trigger operation for the surround view. Here, the same-screen trigger operation for the navigation view and/or the full-screen trigger operation for the surround view both include the button trigger operation or the scenario trigger operation.

The vehicle of the example of the present disclosure realizes mutual switching between the full-screen display of the surround view and the same-screen display of the surround view and the navigation view by a single trigger operation, the operation is easy, the consumption of user attention is reduced, the safety of the driving is improved, and the need that the user prefers to use the surround view is satisfied.

In an optional example of the present disclosure, in a case where the vehicle display screen displays the navigation view in the full-screen mode, the vehicle controls the display screen to display the navigation view and the surround view of the vehicle in the same-screen mode in response to receiving the same-screen trigger operation for the surround view, or in a case where the display screen displays the navigation view and the surround view in the same-screen mode, the vehicle controls the display screen to display the navigation view in the full-screen mode in response to receiving the full-screen trigger operation for the navigation view. Here, the same-screen trigger operation for the surround view and/or the full-screen trigger operation for the navigation view both include the button trigger operation or the scenario trigger operation.

The vehicle of the example of the present disclosure realizes mutual switching between the full-screen display of the navigation view and the same-screen display of the navigation view and the surround view by a single trigger operation, improves the convenience of the operation, avoids the switching operation of the view excessively dispersing the attention of the driver, improves the safety of the driving, and satisfies the need that a part of the drivers prefer to use the navigation view.

In an optional example of the present disclosure, the view display includes the full-screen display of the surround view and the same-screen display of the surround view and the navigation view. The vehicle controls the in-vehicle display screen to display the surround view in the full-screen mode in response to receiving the trigger operation for instructing the full-screen display of the surround view input by the user, and the surround view displayed in the full-screen mode includes the first-kind display element, the second-kind display element, and the third-kind display element. The vehicle controls the display screen to display the navigation view and the surround view in the same-screen mode in response to receiving the trigger operation for instructing the same-screen display input by the user. Here, the surround view displayed in the same-screen mode does not include at least one display element of the first-kind display element and/or the second-kind display element.

In the vehicle of the embodiment of the present disclosure, the number of display elements in the surround view is adjusted depending on different display modes, so that the richness of information and functions of the full-screen surround view is ensured, and at the same time, the identifiability of display elements in the same-screen surround view is improved, thereby improving the display effect of the view and improving the user experience.

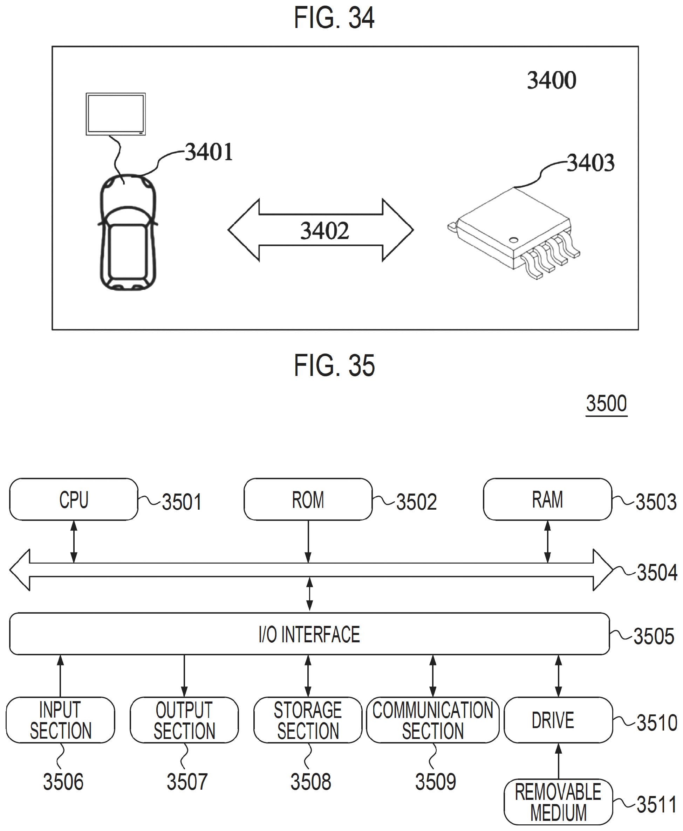

FIG. 34 shows an exemplary system architecture 3400 to which the view display control method or the view display control device of the example of the present disclosure can be applied.

As shown in FIG. 34, the system architecture 3400 may include a display device 3401 mounted on the vehicle, a network 3402, and a server 3403, and the network 3402 is a medium that provides a communication link between the display device 3401 and the server 3403. The network 3402 may include various connection types such as a wired communication link, a wireless communication link, and an optical fiber cable.

The user can use the display device 3401 to interact with the server 3403 via the network 3402 to receive or transmit data, and the like. The display device 3401 may be an in-vehicle display screen, for example, a display screen, and is used to receive the trigger operation of the user and transmit the collected trigger operation of the user to the server 3403. The server 3403 may be a server that provides various vehicle services, and may be disposed in the vehicle or may be disposed in the cloud. The server 3403 can control the display device to display the surround view in the full-screen mode, control the display device to display the surround view and the navigation view in the same-screen mode, control the display device to display the navigation view in the full-screen mode, or control the display device to display the system home screen, the navigation preparation view, or the like in response to the user trigger operation collected by the display device 3401.

It should be noted that the view display control method provided by the example of the present disclosure may be executed by the server 3403, and accordingly, the view display control device may be provided in the server 3403.

It should be understood that the number of display devices, networks, and servers in FIG. 34 is merely exemplary. Any number of display devices, networks, and servers may be provided according to implementation requirements.

Hereinafter, with reference to FIG. 35, a schematic diagram of a computer system 3500 suitable for an electronic apparatus used to implement the example of the present disclosure is shown. The display device shown in FIG. 35 is merely an example, and does not limit the functions and the scope of use of the example of the present disclosure in any way.

As shown in FIG. 35, the computer system 3500 includes a central processing unit (CPU) 3501 that executes various appropriate operations or processes in accordance with a program stored in a read-only memory (ROM) 3502 or a program loaded from a storage unit 3508 to a random-access memory (RAM) 3503. The RAM 3503 also stores various programs and data necessary for the operation of the computer system 3500. The CPU 3501, the ROM 3502, and the RAM 3503 are connected to each other via a bus 3504. An input/output (I/O) interface 3505 is also connected to the bus 3504.

An input section 3506 including a keyboard, a mouse, and the like, an output section 3507 including a cathode ray tube (CRT), a liquid crystal display (LCD), a speaker, and the like, the storage unit 3508 including a hard disk, and a communication unit 3509 of a network interface card including a LAN card, a modem, and the like are connected to the I/O interface 3505. The communication unit 3509 executes a communication process via a network such as the Internet. A drive 3510 is also connected to the I/O interface 3505 as necessary. A removable medium 3511 such as a magnetic disk, an optical disk, a magneto-optical disk, or a semiconductor memory is installed in the drive 3510 as necessary, and a computer program to be read from the medium 3511 is installed in the storage unit 3508 as necessary.

In particular, according to the example disclosed in the present disclosure, the process described with reference to the flowchart may be implemented as a computer software program. For example, the example disclosed in the present disclosure includes a computer program product including a computer program stored on a computer-readable medium, in which the computer program includes program code for executing the method shown in the flowchart. In such an example, the computer program may be downloaded and installed from the network by the communication unit 3509 and/or installed from the removable medium 3511. In a case where the computer program is executed by the central processing unit (CPU) 3501, the above functions defined in the system of the present disclosure are executed.

It should be noted that the computer-readable medium disclosed in the present disclosure may be a computer-readable signal medium or a computer-readable storage medium, or any combination thereof. The computer-readable storage medium may be, for example, a system, an apparatus, or a device of electricity, magnetism, light, electromagnetism, infrared rays, or a semiconductor, or any combination of the above, but is not limited thereto. More specific examples of the computer-readable storage medium include an electrical connection having one or more conductive wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any appropriate combination of the above. In the present disclosure, the computer-readable storage medium may be any tangible medium that is used by or in combination with a command execution system, apparatus, or device, or that includes or stores a program. In the present disclosure, the computer-readable signal medium may include a data signal included in a baseband or propagated as a part of a carrier wave, and carrying a computer-readable program code. The propagated data signal may include an electromagnetic signal, an optical signal, or any appropriate combination of the above, but may adopt various forms without being limited thereto. The computer-readable signal medium may be any computer-readable medium other than the computer-readable storage medium, and the computer-readable medium can transmit, propagate, or transfer a program that is used by or in combination with a command execution system, apparatus, or device. The program code included in the computer-readable medium may be transmitted by any appropriate medium including wireless, electric wire, optical cable, RF, or the like, or any appropriate combination of the above, but is not limited thereto.

The flowcharts and block diagrams in the drawings illustrate the system architecture, functions, and operations of possible implementations of the system, method, and computer program product according to various examples of the present disclosure. In this regard, each block in the flowchart or the block diagram can represent a module, a program segment, or a part of code including one or more executable instructions for implementing a predetermined logical function. It should be noted that the functions shown in the blocks may occur in an order different from the order shown in the drawings. For example, two consecutively shown blocks may actually be basically executed in parallel, and they may be executed in reverse order, but this depends on the functions involved. It should be noted that each block in the block diagram or the flowchart, and a combination of blocks in the block diagram or the flowchart may be implemented by a dedicated hardware-based system that executes a predetermined function or operation, or may be implemented by a combination of dedicated hardware and computer instructions.

The module according to the example of the present disclosure may be implemented in a software form or a hardware form. The described module may be provided in a processor, and for example, the processor may be described as including a reception module and a control module. Here, the names of these modules do not limit the modules themselves in some cases. For example, the control module may also be described as a "module for controlling a display screen to display a navigation view".

As one aspect, the present disclosure further provides a computer-readable medium, and the computer-readable medium may be included in the device described in the above example, or may be present separately and not incorporated into the device. The computer-readable medium carries one or more programs, and when the one or more programs are executed by the device, the device includes a first display mode and a second display mode, in which the first display mode includes displaying the navigation view in full screen and displaying the surround view in full screen by the in-vehicle display screen. The second display mode includes displaying the navigation view in full screen, displaying the surround view in full screen, and displaying the navigation view and the surround view on the same screen by the display screen. Displaying the navigation view and the surround view on the same screen includes displaying the navigation view and the surround view at the same time by the display screen. The user selects the first display mode or the second display mode by setting.

According to the technical solutions of embodiments of the present disclosure, by supporting user-configurable view display modes, the navigation view and/or the surround view can be displayed in a user-specified display manner, so that the view display manner better matches user needs and the user experience is improved.

The computer-readable medium carries one or more programs, and when the one or more programs are executed by the device, the device displays a surround view of a vehicle on a display in full-screen mode in response to receiving a trigger operation for a first control displayed on the vehicle display screen, and displays a navigation view on the display in full-screen mode or displays the navigation view and the surround view on the same screen in response to receiving a trigger operation for a second control displayed on the display screen, and the second control is different from the first control.

According to the technical aspect of the example of the present disclosure, the surround view and/or the navigation view is opened by one trigger operation, so that an operation step of opening the surround view and/or the navigation view is simplified, the convenience of the operation is improved, and the dispersion of the driver's attention is reduced. At the same time, the view display mode is enriched, the user can select a corresponding view display mode according to the need, and the user's experience is improved.

The computer-readable medium carries one or more programs, and when the one or more programs are executed by the device, in a case where the vehicle display screen displays the surround view of the vehicle in the full-screen mode, the device controls the display screen to display the surround view and the navigation view in the same-screen mode in response to receiving the same-screen trigger operation for the navigation view, or in a case where the display screen displays the surround view and the navigation view in the same-screen mode, the device controls the display screen to display the surround view in the full-screen mode in response to receiving the full-screen trigger operation for the surround view. Here, the same-screen trigger operation for the navigation view and/or the full-screen trigger operation for the surround view both include the button trigger operation or the scenario trigger operation.

According to the technical aspect of the example of the present disclosure, mutual switching between full-screen display of a surround view and same-screen display of the surround view and the navigation view is realized by one trigger operation, the operation is easy, the consumption of user attention is reduced, the driving safety is improved, and the need for the user to prefer to use the surround view is satisfied.

The computer-readable medium carries one or more programs, and when the one or more programs are executed by the device, the device is enabled to perform the following operations: in a case where the vehicle display screen displays the navigation view in the full-screen mode, the device controls the display screen to display the navigation view and the surround view of the vehicle in the same-screen mode in response to receiving the same-screen trigger operation for the surround view, or in a case where the display screen displays the navigation view and the surround view in the same-screen mode, the device controls the display screen to display the navigation view in the full-screen mode in response to receiving the full-screen trigger operation for the navigation view. Here the same-screen trigger operation for the surround view and/or the full-screen trigger operation for the navigation view both include the button trigger operation or the scenario trigger operation.

According to the technical aspect of the example of the present disclosure, mutual switching between the full-screen display of the navigation view and the same-screen display of the navigation view and the surround view is realized by one trigger operation, the convenience of the operation is improved, the switching operation of the view is avoided from excessively dispersing the driver's attention, the driving safety is improved, and the need for some drivers to prefer to use the navigation view is satisfied.

The computer-readable medium carries one or more programs, and when the one or more programs are executed by the device, the device is caused to perform the following operations: the view display includes the full-screen display of the surround view and the same-screen display of the surround view and the navigation view, the device controls the in-vehicle display screen to display the surround view in the full screen mode in response to receiving the trigger operation for instructing the full-screen display of the surround view input by the user. Here the surround view displayed in the full-screen mode includes the first-kind display element, the second-kind display element, and the third-kind display element, and the device controls the display screen to display the navigation view and the surround view in the same-screen mode in response to receiving the trigger operation for instructing the same-screen display input by the user. Here, the surround view displayed in the same-screen mode does not include at least one display element of the first-kind display element and/or the second-kind display element.

According to the technical aspect of the example of the present disclosure, the number of display elements in the surround view is adjusted according to different display modes, so that the richness of information and functions of the full-screen surround view is ensured, and at the same time, the identifiability of display elements in the same-screen surround view is improved, thereby improving the display effect of the screen, and improving the user experience.

The above specific embodiments do not limit the scope of protection of the present disclosure. Those skilled in the art should understand that various modifications, combinations, sub-combinations, and alternatives can be made according to design requirements and other factors. All modifications, equivalent replacements, improvements, and the like made within the spirit and principles of the present disclosure should be included within the scope of protection of the present disclosure.

## Claims

1. A view display control method comprising:
displaying a surround view and a navigation view in a same-screen mode with a display screen (131,132) of a vehicle in response to receiving a same-screen trigger operation for the navigation view in a case where the display screen displays the surround view of the vehicle in a full-screen mode; or
displaying the surround view in the full-screen mode with the display screen in response to receiving a full-screen trigger operation for the surround view in a case where the display screen displays the surround view and the navigation view in the same-screen mode,
wherein either or both of the same-screen trigger operation for the navigation view and the full-screen trigger operation for the surround view include a button trigger operation and a scenario trigger operation.

2. The view display control method according to claim 1, wherein:
the receiving of the same-screen trigger operation for the navigation view includes
the same-screen trigger operation for the navigation view including a same-screen scenario trigger operation based on a navigation-applicable scenario, and
determining that the same-screen scenario trigger operation based on the navigation-applicable scenario is received when a current scenario of the vehicle is detected to be the navigation-applicable scenario; and
the navigation-applicable scenario includes a distance between a position of the vehicle and an intersection, a fork in a road, or a ramp entrance of a highway being equal to or less than a predetermined distance.

3. The view display control method according to claim 1 or 2, wherein:
the receiving of the full-screen trigger operation for the surround view includes
the full-screen trigger operation for the surround view including a full-screen scenario trigger operation based on a surround-view-applicable scenario, and
determining that the full-screen scenario trigger operation based on the surround-view-applicable scenario is received when a current scenario of the vehicle is detected to be the surround-view-applicable scenario; and
the surround-view-applicable scenario includes the vehicle preparing to enter a parking space, the vehicle being in a narrow road segment, the vehicle passing another vehicle, or the vehicle changing a lane.

4. The view display control method according to any one of claims 1 to 3, wherein:
the same-screen trigger operation for the navigation view includes a navigation button trigger operation;
the surround view displayed in the full-screen mode includes a navigation button; and
the displaying of the surround view and the navigation view in the same-screen mode with the display screen in response to receiving the same-screen trigger operation for the navigation view includes displaying the surround view and the navigation view in the same-screen mode with the display screen in response to receiving a trigger operation for the navigation button.

5. The view display control method according to claim 4, wherein:
a display state of the navigation button is a schematic diagram of the navigation view; and
the schematic diagram of the navigation view is used to dynamically and in real time display a navigation route.

6. The view display control method according to claim 5, wherein the navigation button displays a traffic congestion status of the navigation route in real time.

7. The view display control method according to any one of claims 1 to 6, wherein the displaying of the surround view and the navigation view in the same-screen mode with the display screen includes displaying the navigation view in the full-screen mode with the display screen and displaying the surround view on an upper layer over a portion of the navigation view.

8. The view display control method according to any one of claims 1 to 6, wherein the displaying of the surround view and the navigation view in the same-screen mode with the display screen includes
displaying the surround view in a first part of the display screen, displaying the navigation view in a second part of the display screen, and no overlapping region between the second part and the first part.

9. The view display control method according to any one of claims 1 to 8, wherein:
the surround view displayed in the full-screen mode includes a first-kind display element, a second-kind display element, and a third-kind display element; and
the surround view displayed in the same-screen mode does not include at least one display element of either or both of the first-kind display element and the second-kind display element.

10. The view display control method according to claim 9, wherein:
the first-kind display element includes at least any one or any combination of an information presentation card of a navigation route, an indicator bar for autonomous-driving-supported road segments along the navigation route, and a schematic diagram of the navigation view; and
the second-kind display element includes at least either or both of a setting bar for customizing a driving assistance function and a state identifier of a driving assistance system.

11. The view display control method according to claim 10, wherein the setting bar for customizing the driving assistance function includes a button for setting a driving assistance mode.

12. The view display control method according to claim 10, wherein:
the surround view displayed in the full-screen mode includes at least any one or any combination of the information presentation card of the navigation route, the indicator bar for the autonomous-driving-supported road segments along the navigation route, and the schematic diagram of the navigation view; and
in a case where the surround view and the navigation view are displayed in the same-screen mode, the surround view does not include at least any one or any combination of the information presentation card of the navigation route, the indicator bar for the autonomous-driving-supported road segments along the navigation route, and the schematic diagram of the navigation view.

13. The view display control method according to claim 10, wherein:
the surround view displayed in the full-screen mode includes at least either or both of the setting bar for customizing the driving assistance function and the state identifier of the driving assistance system; and
in a case where the surround view and the navigation view are displayed in the same-screen mode, the surround view does not include at least either or both of the setting bar for customizing the driving assistance function and the state identifier of the driving assistance system.
